# EUROPEAN PATENT APPLICATION

(11) **EP 4 835 621 A1**
(43) Date of publication of application: **04.11.2026**
(21) Application number: 24922479.1
(22) Date of filing: 18.12.2024
(51) Int. Cl.: G06F 3/01, G06F 1/16, G06F 3/00, G02B 27/01, G06F 3/0484, G06F 21/36, G06V 40/18

(54) **WEARABLE DEVICE AND METHOD FOR MOVING VIRTUAL OBJECT TO OBTAIN INFORMATION ABOUT GAZE POSITIONS**

(30) Priority: 31.01.2024 KR 20240015027; 12.03.2024 KR 20240034687
(71) Applicant: Samsung Electronics Co., Ltd., Suwon-si, Gyeonggi-do 16677 (KR)
(72) Inventor: LEE, Sanghun, Suwon-si, Gyeonggi-do 16677 (KR); KIM, Kihwan, Suwon-si, Gyeonggi-do 16677 (KR); KIM, Sungoh, Suwon-si, Gyeonggi-do 16677 (KR); KIM, Jihyun, Suwon-si, Gyeonggi-do 16677 (KR); KIM, Harksang, Suwon-si, Gyeonggi-do 16677 (KR); YEOM, Donghyun, Suwon-si, Gyeonggi-do 16677 (KR); JUNG, Sunyoung, Suwon-si, Gyeonggi-do 16677 (KR)
(74) Representative: Gulde & Partner
(86) International application number: PCT/KR2024/097144
(87) International publication number: WO 2025/164971

(57) **Abstract**

A wearable device according to an embodiment may display a virtual object on at least one display. The wearable device may determine a user's gaze position by using eye images obtained from at least one camera. The wearable device, during detection of a gaze position in a detection area including the virtual object, may determine information indicating the displacement of gaze positions detected respectively at two viewpoints. The wearable device may determine the distance for moving the virtual object within a range less than the magnitude of the displacement indicated by the determined information. The wearable device, on the basis of determining that the distance is longer than a threshold distance, may move the virtual object by the determined distance in the direction of the displacement indicated by the information. The wearable device, on the basis of determining that the distance is shorter than the threshold distance, may stop moving the virtual object and execute a function related to the virtual object.

## Description

### [Technical Field]

The present disclosure relates to a wearable device for moving a virtual object to obtain information on a gaze position and a method thereof.

### [Background Art]

In order to provide an enhanced user experience, an electronic device that provides an augmented reality (AR) service for displaying information generated by a computer in association with an external object in the real world is being developed. The electronic device may be a wearable device wearable by a user. For example, the electronic device may be AR glasses and/or a head-mounted device (HMD).

The above-described information may be provided as a related art for the purpose of helping understanding of the present disclosure. No argument or decision is made as to whether any of the above descriptions may be applied as a prior art related to the present disclosure.

### [Disclosure]

### [Technical Solution]

According to an embodiment, a wearable device may comprise at least one display, at least one camera configured to be positioned toward an eye of a user wearing the wearable device, at least one processor comprising processing circuitry, and memory, comprising one or more storage mediums, storing instructions. The instructions, when executed by the at least one processor individually or collectively, may cause the wearable device to display, on the at least one display, a virtual object. The instructions, when executed by the at least one processor individually or collectively, may cause the wearable device to determine a gaze position of the user by using an image of the eye obtained from the at least one camera. The instructions, when executed by the at least one processor individually or collectively, may cause the wearable device to, while detecting the gaze position within a detection area which includes the virtual object, determine information indicating a displacement of gaze positions respectively detected at two time points. The instructions, when executed by the at least one processor individually or collectively, may cause the wearable device to, based on the determined information, determine a distance for moving the virtual object within a range lower than a size of the displacement indicated by the information. The instructions, when executed by the at least one processor individually or collectively, may cause the wearable device to, based on determining the distance longer than a threshold distance, move the virtual object by the determined distance along a direction of the displacement indicated by the information. The instructions, when executed by the at least one processor individually or collectively, may cause the wearable device to, based on determining the distance shorter than the threshold distance, cease to move the virtual object. The instructions, when executed by the at least one processor individually or collectively, may cause the wearable device to, based on cessation of moving the virtual object, execute a function associated with the virtual object.

In an embodiment, a non-transitory computer readable storage medium storing instructions may be provided. The instructions may be executed by a wearable device. The wearable device may comprise at least one display and at least one camera configured to be positioned toward an eye of a user wearing the wearable device. The instructions, when executed by the wearable device, may cause the wearable device to display, on the at least one display, a virtual object. The instructions, when executed by the wearable device, may cause the wearable device to determine a gaze position of the user by using an image of the eye obtained from the at least one camera. The instructions, when executed by the wearable device, may cause the wearable device to, while detecting the gaze position within a detection area which includes the virtual object, determine information indicating a displacement of the gaze positions respectively detected at two time points. The instructions, when executed by the wearable device, may cause the wearable device to, based on the determined information, determine a distance for moving the virtual object within a range lower than a size of the displacement indicated by the information. The instructions, when executed by the wearable device, may cause the wearable device to, based on determining the distance longer than a threshold distance, move the virtual object by the determined distance along a direction of the displacement indicated by the information. The instructions, when executed by the wearable device, may cause the wearable device to, based on determining the distance shorter than the threshold distance, cease to move the virtual object. The instructions, when executed by the wearable device, may cause the wearable device to, based on cessation of moving the virtual object, execute a function associated with the virtual object.

According to an embodiment, a wearable device may comprise at least one display, at least one camera configured to be positioned toward an eye of a user wearing the wearable device, at least one processor comprising processing circuitry, and memory, comprising one or more storage mediums, storing instructions. The instructions, when executed by the at least one processor individually or collectively, may cause the wearable device to display, on the at least one display, a virtual object. The instructions, when executed by the at least one processor individually or collectively, may cause the wearable device to determine a gaze position of the user by using an image of the eye obtained from the at least one camera. The instructions, when executed by the at least one processor individually or collectively, may cause the wearable device to, based on detecting the gaze position within a detection area which includes the virtual object, determine information indicating a displacement of the gaze position within the detection area. The instructions, when executed by the at least one processor individually or collectively, may cause the wearable device to move the virtual object along a direction of the displacement. A distance of the virtual object moved along the direction may be lower than a size of the displacement. The at least one processor may be configured individually or collectively to repeatedly move the virtual object along the direction while the distance exceeds a threshold distance. The instructions, when executed by the at least one processor individually or collectively, may cause the wearable device to, based on identifying that the distance is less than the threshold distance, cease to move the virtual object by using the gaze position. The instructions, when executed by the at least one processor individually or collectively, may cause the wearable device to, based on cessation of moving the virtual object, execute a function associated with the virtual object.

In an embodiment, a non-transitory computer readable storage medium storing instructions may be provided. The instructions may be executed by a wearable device. The wearable device may comprise at least one display and at least one camera configured to be positioned toward an eye of a user wearing the wearable device. The instructions, when executed by the wearable device, may cause the wearable device to display, on the at least one display, a virtual object. The instructions, when executed by the wearable device, may cause the wearable device to determine a gaze position of the user by using an image of the eye obtained from the at least one camera. The instructions, when executed by the wearable device, may cause the wearable device to, based on detecting the gaze position within a detection area which includes the virtual object, determine information indicating a displacement of the gaze position within the detection area. The instructions, when executed by the wearable device, may cause the wearable device to move the virtual object along a direction of the displacement. A distance of the virtual object moved along the direction may be lower than a size of the displacement. The instructions, when executed by the wearable device, may cause the wearable device to repeatedly move the virtual object along the direction while the distance exceeds a threshold distance. The instructions, when executed by the wearable device, may cause the wearable device to, based on identifying that the distance is less than the threshold distance, cease to move the virtual object by using the gaze position. The instructions, when executed by the wearable device, may cause the wearable device to, based on cessation of moving the virtual object, execute a function associated with the virtual object.

In an embodiment, a method of a wearable device may be provided. The wearable device may comprise at least one display and at least one camera configured to be positioned toward an eye of a user wearing the wearable device. The method may comprise displaying, on the at least one display, a plurality of virtual objects. The method may comprise determining a gaze position of the user by using an image of the eye obtained from the at least one camera. The method may comprise, based on detecting the gaze position within an overlapping area of detection areas of the plurality of virtual objects, moving the plurality of virtual objects such that the plurality of virtual objects are moved away from the gaze position. The method may comprise determining a first virtual object among the plurality of virtual objects which is focused by the user by using a displacement of the gaze position that is detected after the plurality of virtual objects are moved. The method may comprise, based on determining the first virtual object, storing the displacement of the gaze position as information to be used for calibration associated with the gaze position adjacent to the first virtual object.

According to an embodiment, a wearable device may comprise at least one display, at least one camera configured to be positioned toward an eye of a user wearing the wearable device, at least one processor comprising processing circuitry, and memory, comprising one or more storage mediums, storing instructions. The instructions, when executed by the at least one processor individually or collectively, may cause the wearable device to display, on the at least one display, a plurality of virtual objects. The instructions, when executed by the at least one processor individually or collectively, may cause the wearable device to determine a gaze position of the user by using an image of the eye obtained from the at least one camera. The instructions, when executed by the at least one processor individually or collectively, may cause the wearable device to, based on detecting the gaze position within an overlapping area of detection areas of the plurality of virtual objects, move the plurality of virtual objects such that the plurality of virtual objects are moved away from the gaze position. The instructions, when executed by the at least one processor individually or collectively, may cause the wearable device to determine a first virtual object among the plurality of virtual objects which is focused by the user by using a displacement of the gaze position that is detected after the plurality of virtual objects are moved. The instructions, when executed by the at least one processor individually or collectively, may cause the wearable device to, based on determining the first virtual object, store the displacement of the gaze position as information to be used for calibration associated with the gaze position adjacent to the first virtual object.

### [Description of the Drawings]

FIG. 1 illustrates an embodiment of a wearable device displaying a screen including a virtual object.
FIG. 2 illustrates a block diagram of a wearable device according to an embodiment.
FIG. 3 illustrates a flowchart of a wearable device according to an embodiment.
FIG. 4 illustrates a screen displayed by a wearable device according to an embodiment.
FIGS. 5A, 5B, 5C, and 5D illustrate states of a wearable device detecting a gaze position.
FIGS. 6A and 6B illustrate an operation of a wearable device executing a function associated with a virtual object by using a gaze position.
FIG. 7 illustrates an operation of a wearable device moving a virtual object according to a gaze position.
FIG. 8 illustrates an operation of a wearable device displaying a virtual object associated with a gaze position on a lock screen.
FIGS. 9A, 9B, 9C, and 9D illustrate an operation of a wearable device detecting a gaze position within an overlapping area of detection areas.
FIGS. 10A, 10B, and 10C illustrate an operation of a wearable device detecting a gaze position within an overlapping area of detection areas.
FIG. 11 illustrates an operation of a wearable device changing a position and/or a shape of a virtual object by using a gaze position.
FIGS. 12A and 12B illustrate an operation of a wearable device changing a depth of a virtual object by using a gaze position.
FIG. 13A illustrates an example of a perspective view of a wearable device according to an embodiment.
FIG. 13B illustrates an example of one or more hardware positioned in a wearable device according to an embodiment.
FIGS. 14A and 14B illustrate an example of an exterior of a wearable device according to an embodiment.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, are only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

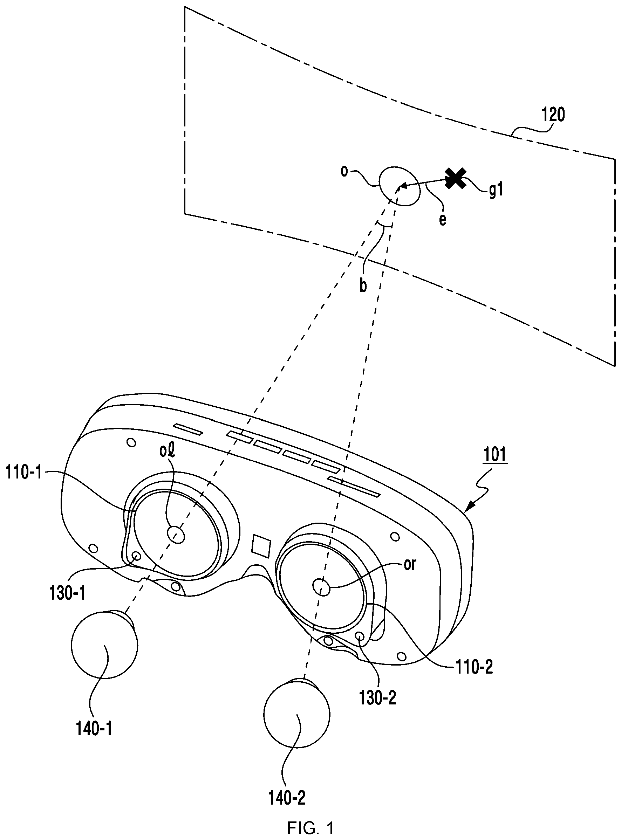

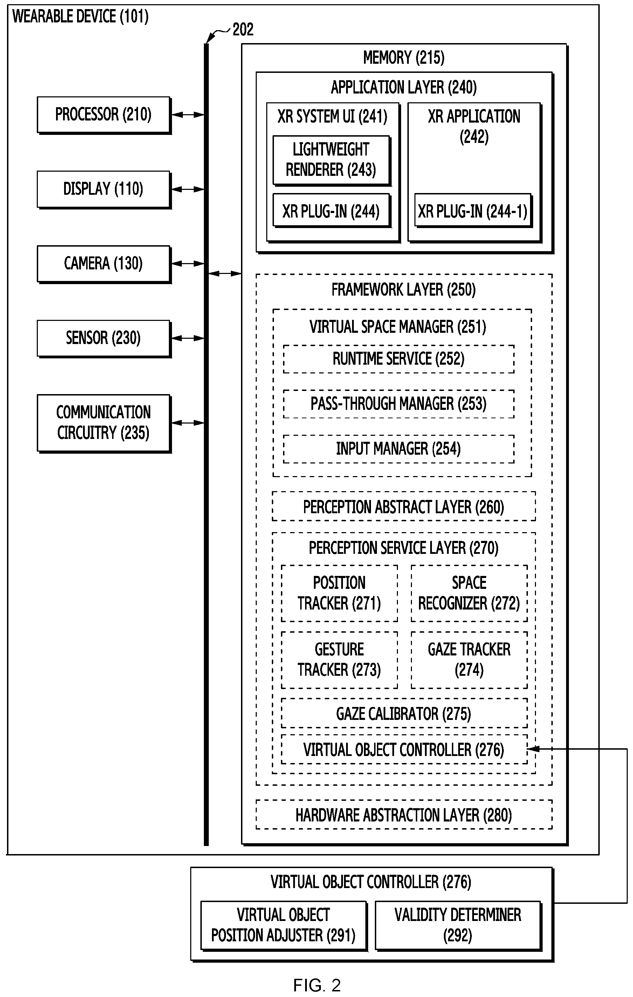

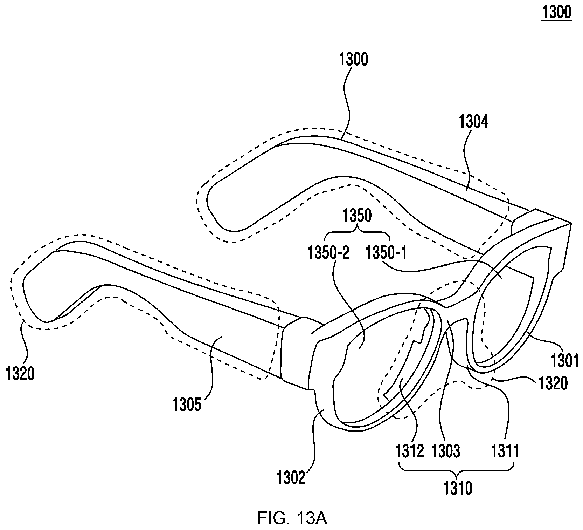

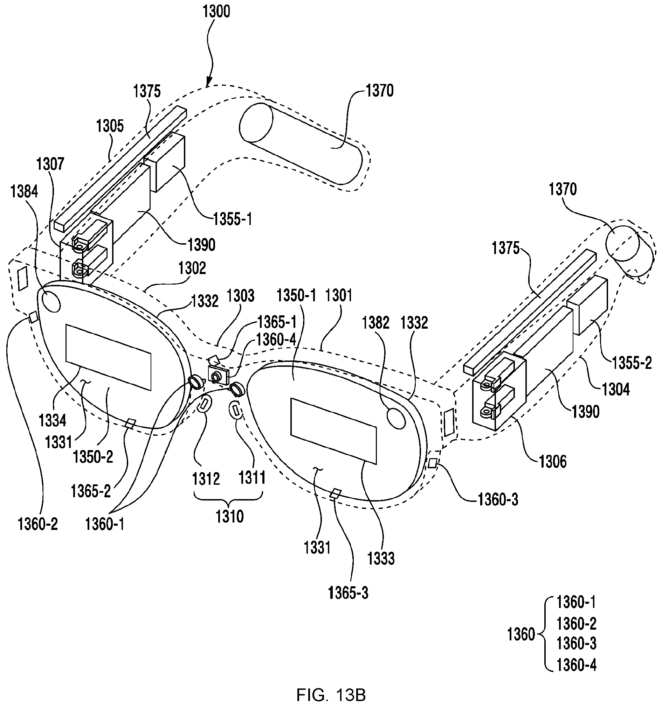

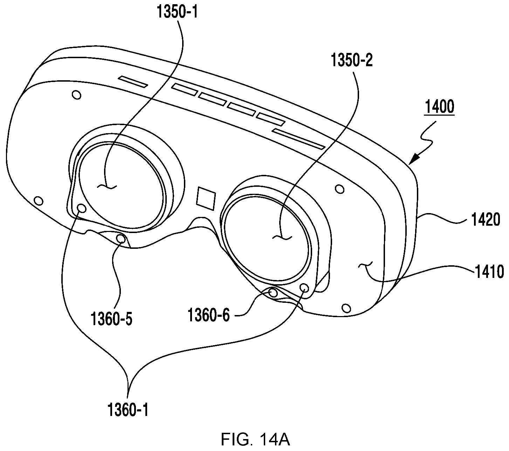

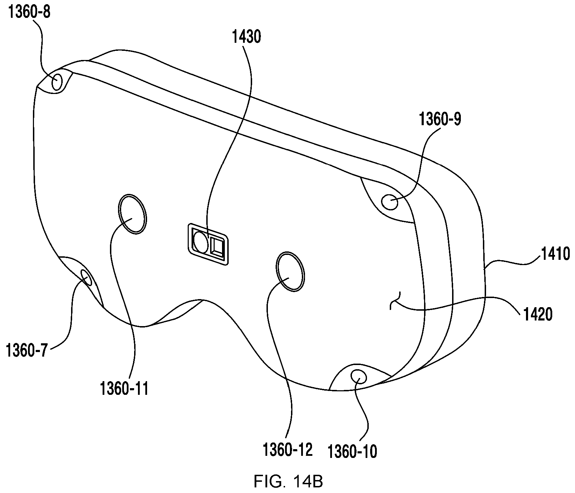

FIG. 1 illustrates an embodiment of a wearable device 101 displaying a screen 120 including a virtual object o. The wearable device 101 may include a head-mounted display (HMD) wearable on a head of a user. The wearable device 101 may be referred to as a head-mount display (HMD) device, a headgear electronic device, a glasses-type (or goggles-type) electronic device, a video see-through (or visible see-through) (VST) device, an extended reality (XR) device, a virtual reality (VR) device, and/or an augmented reality (AR) device. Although an appearance of the wearable device 101 having a shape of glasses is illustrated, an embodiment is not limited thereto. An example of a hardware configuration included in the wearable device 101 will be exemplarily described with reference to FIG. 2. An example of a structure of the wearable device 101 wearable on the head of the user will be described with reference to FIGS. 13A, 13B, 14A, and/or 14B. The wearable device 101 may be referred to as an electronic device. For example, the electronic device may include an accessory (e.g., a strap) for being attached to the head of the user.

According to an embodiment, the wearable device 101 may execute a function associated with augmented reality (AR) and/or mixed reality (MR). For example, in a state in which the user wears the wearable device 101, the wearable device 101 may include at least one lens positioned adjacent to an eye of the user. The wearable device 101 may combine light emitted from a display of the wearable device 101 with ambient light passing through the lens. A display area of the display may be formed in the lens through which the ambient light passes. Since the wearable device 101 combines the ambient light and the light emitted from the display, the user may view an image in which a real object recognized by the ambient light and a virtual object formed by the light emitted from the display are mixed. The above-described augmented reality, mixed reality, and/or virtual reality may be referred to as extended reality (XR).

According to an embodiment, the wearable device 101 may execute a function associated with video see-through (or visible see-through) (VST) and/or virtual reality (VR). For example, in a state in which the user wears the wearable device 101, the wearable device 101 may include a housing covering the eye of the user. In the state, the wearable device 101 may include a display positioned on a first surface of the housing facing the eye. Referring to FIG. 1, the wearable device 101 may include a first display 110-1 configured to face a left eye 140-1 of the user wearing the wearable device 101 and a second display 110-2 configured to face a right eye 140-2 of the user wearing the wearable device 101.

According to an embodiment, the wearable device 101 may include at least one camera configured to be arranged toward the eye of the user. Referring to FIG. 1, the wearable device 101 may include a first camera 130-1 configured to face the left eye 140-1 of the user wearing the wearable device 101 and a second camera 130-2 configured to face the right eye 140-2 of the user wearing the wearable device 101. The wearable device 101, which obtains an image and/or a video of two eyes (e.g., the left eye 130-1 and/or the right eye 130-2) of the user from the first camera 130-1 and/or the second camera 130-2, may calculate or determine a position gazed by the user. The position gazed by the user, detected by the wearable device 101, may be referred to as a gaze position, a gaze point, and/or a gaze location.

Referring to FIG. 1, the exemplary screen 120 displayed by the wearable device 101 is illustrated. The wearable device 101 may display, in the screen 120, the virtual object o having a three-dimensional position. The wearable device 101 may change a distance of the virtual object o from the wearable device 101 recognized by the user by changing a first position of a virtual object ol in the first display 110-1 and a second position of a virtual object or in the second display 110-2. For example, the wearable device 101 may change a perspective of the virtual object o, by adjusting a difference between the first position and the second position (e.g., a position difference in a horizontal axis of the screen 120). As the difference increases, a binocular parallax b of the virtual object o may increase, and the wearable device 101 may provide a user viewing the virtual object o with a sense such as the virtual object o approaching. As the difference decreases, the binocular parallax b of the virtual object o may decrease, and the wearable device 101 may provide the user viewing the virtual object o with a sense such as the virtual object o moving away.

According to an embodiment, the wearable device 101 may be configured to track a gaze position by using at least one camera, such as the first camera 130-1 and the second camera 130-2. Accuracy of the gaze position calculated by the wearable device 101 may be changed due to a positional relationship between two eyes of the user and the wearable device 101, which is changed each time the user wears the wearable device 101 (or while the user wears the wearable device 101). According to an embodiment, the wearable device 101 may compensate for or reduce an error of the gaze position caused by the positional relationship, by performing calibration associated with the gaze position.

In an embodiment, in order to perform the calibration, the wearable device 101 may obtain calibration information associated with the gaze position. The calibration information may include information associated with a calculation of the gaze position. For example, the calibration information may include at least one of an image and/or a video obtained by using the first camera 130-1 and/or the second camera 130-2 and/or a result of calculating the gaze position from the image and/or the video. According to an embodiment, the wearable device 101 may obtain the calibration information by using a screen for a function different from a function of obtaining the calibration information, such as a lock screen, instead of a user interface (UI) dedicated for obtaining the calibration information (e.g., a UI including one or more virtual objects and/or one or more visual objects).

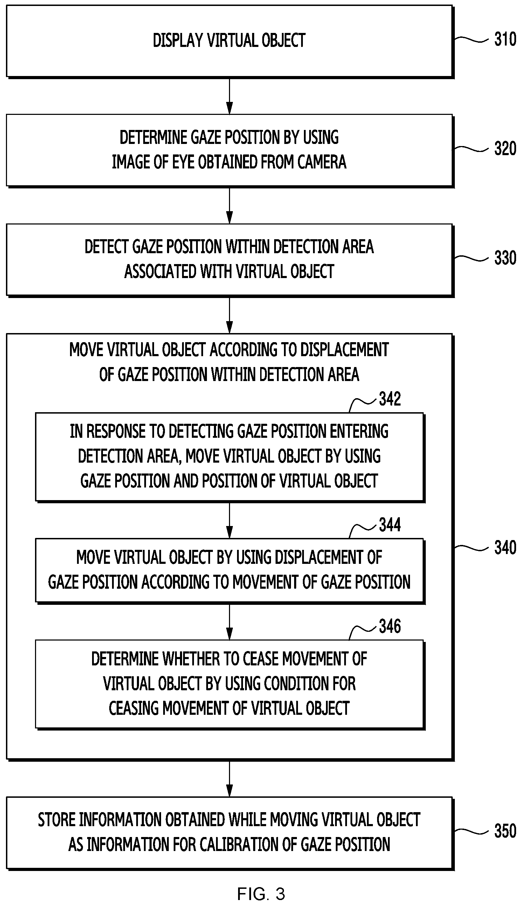

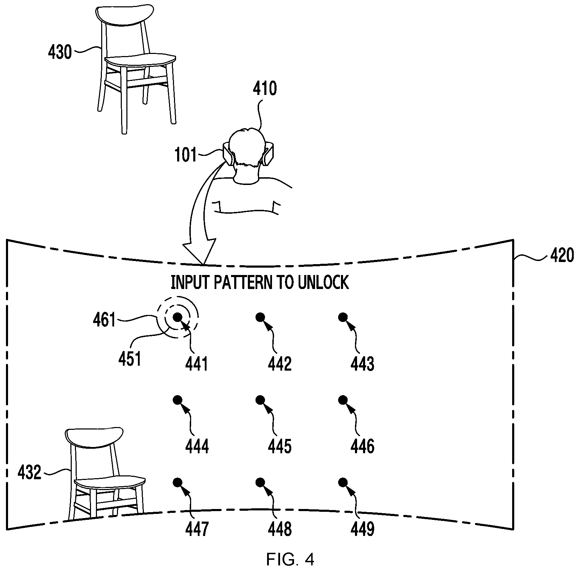

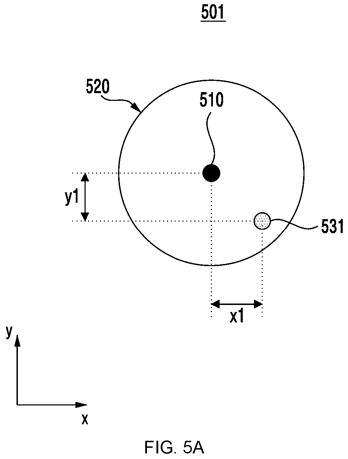

For example, by moving the virtual object o displayed for the another function, the wearable device 101 may cause a gaze movement of the user such as following the virtual object o. By using the gaze movement, the wearable device 101 may store information associated with the gaze of the user viewing a specific position in the screen 120 as calibration information. An exemplary operation in which the wearable device 101 triggers the gaze movement by moving the virtual object o in the screen 120 will be described with reference to FIG. 3. An exemplary operation in which the wearable device 101 obtains the calibration information by using the lock screen will be described with reference to FIGS. 4, 6A to 6B, 8, and 9A to 9D. An exemplary operation in which the wearable device 101 obtains the calibration information by using a virtual object displayed on various screens including the lock screen will be described with reference to FIGS. 5A to 5D, 7, 10A to 10C, 11, and 12A to 12B.

FIG. 2 illustrates a block diagram of a wearable device 101 according to an embodiment. A wearable device 101 of FIG. 2 may include the wearable device 101 of FIG. 1.

Referring to FIG. 2, the wearable device 101 according to an embodiment may include a processor 210, memory 215, a display 110 (e.g., the first display 110-1 and/or the second display 110-2 of FIG 1), a camera 130 (e.g., the first camera 130-1 and/or the second camera 130-2 of FIG. 1), a sensor 230, or communication circuitry 235. The processor 210, the memory 215, the display 110, and/or the sensor 230 may be electrically and/or operably connected to each other by an electronic component such as a communication bus 202. In the present disclosure, an operational connection of electronic components may include a direct connection established between the electronic components and/or an indirect connection established between the electronic components such that a first electronic component of the electronic components is controlled by a second electronic component of the electronic components. The type and/or number of electronic components included in the wearable device 101 is not limited as illustrated in FIG. 2. For example, the wearable device 101 may include only some of the electronic components illustrated in FIG. 2.

According to an embodiment, the processor 210 of the wearable device 101 may include a hardware component for processing data based on one or more instructions. For example, the circuitry for processing data may include an arithmetic and logic unit (ALU), a field programmable gate array (FPGA), a central processing unit (CPU) and/or an application processor (AP). In an embodiment, the wearable device 101 may include one or more processors. The processor 210 may have a structure of a multi-core processor such as a dual core, a quad core, a hexa core, and/or an octa core. The multi-core processor structure of the processor 210 may include a structure (e.g., a big-little structure) based on a plurality of core circuits, which are separated by power consumption, clock, and/or computational amount per unit time. In an embodiment including the processor 210 with a multi-core processor structure, operations and/or functions of the present disclosure may be performed individually or collectively by one or more cores included in the processor 210.

According to an embodiment, the memory 215 of the wearable device 101 may include an electronic component for storing data and/or instructions inputted to and/or outputted from the processor 210. For example, the memory 215 may include a volatile memory such as a random-access memory (RAM) and/or a non-volatile memory such as a read-only memory (ROM). For example, the volatile memory may include at least one of a dynamic RAM (DRAM), a static RAM (SRAM), a cache RAM, and a pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disc, and an embedded multi-media card (eMMC). In an embodiment, the memory 215 may be referred to as a storage.

In an embodiment, the display 110 of the wearable device 101 may output visualized information to a user of the wearable device 101. The display 110 arranged in front of eyes of the user wearing the wearable device 101 may be disposed in at least a portion of a housing of the wearable device 101 (e.g., the first display 110-1 and/or the second display 110-2 of FIG 1). For example, the display 110 may output visualized information to the user by being controlled by the processor 210 including a circuit such as, a graphic processing unit (GPU). The display 110 may include a flexible display, a flat panel display (FPD) and/or electronic paper. The display 110 may include a liquid crystal display (LCD), a plasma display panel (PDP), and/or one or more light emitting diode (LED). The LED may include an organic LED (OLED). The embodiment is not limited thereto, and for example, when the wearable device 101 includes a lens for transmitting external light (or ambient light), the display 110 may include a projector (or projection assembly) for projecting light onto the lens. In an embodiment, the display 110 may be referred to as a display panel and/or a display module. Pixels included in the display 110 may be disposed toward any one of the user's two eyes when worn by the user of the wearable device 101. For example, the display 110 may include display areas (or active areas) corresponding to each of the user's two eyes.

In an embodiment, the camera 130 of the wearable device 101 may include one or more optical sensors (e.g., a charged coupled device (CCD) sensor, a complementary metal oxide semiconductor (CMOS) sensor) generating an electrical signal indicating a color and/or brightness of light. The camera 130 may be referred to as an image sensor and may be included in the sensor 230 of FIG. 2. A plurality of optical sensors included in the camera 130 may be arranged in a form of a 2 dimensional array. The camera 130 may substantially simultaneously obtain electrical signals of each of the plurality of optical sensors and generate 2-dimensional frame data corresponding to light reaching the optical sensors of the 2 dimensional array. For example, photo data captured by using the camera 130 may indicate a 2 dimensional frame data obtained from the camera 130. For example, video data captured by using the camera 130 may mean a sequence of a plurality of 2 dimensional frame data obtained from the camera 130 according to a frame rate. The camera 130 may further include a flash light, disposed toward a direction in which the camera 130 receives light, for outputting light toward the direction.

In an embodiment, the wearable device 101 may include, as an example of the camera 130, a plurality of cameras disposed toward different directions. As described above with reference to FIG. 1, the plurality of cameras may include a gaze tracking camera (e.g., the camera 130-1 of FIG. 1 and/or the second camera 130-2) configured to be arranged toward eyes of a user wearing the wearable device 101. The plurality of cameras may include an outward camera. The processor 210 may identify a direction of a gaze of the user by using an image and/or a video obtained from the gaze tracking camera. The gaze tracking camera may include an infrared (IR) sensor. The gaze tracking camera may be referred to as an eye sensor and/or an eye tracker.

For example, the outward camera may be disposed toward a front side (e.g., a direction toward which two eyes may face) of a user wearing the wearable device 101. The wearable device 101 may include a plurality of outward cameras. An embodiment is not limited thereto, and the outward camera may be disposed toward an external space. By using an image and/or a video obtained from the outward camera, the processor 210 may identify an external object. For example, the processor 210 may identify a position, a shape, and/or a gesture (e.g., a hand gesture) of a hand of a user wearing the wearable device 101, based on an image and/or a video obtained from the outward camera. By using an image and/or a video of an external environment obtained from the outward camera, the processor 210 may recognize or track one or more objects in the external environment.

In an embodiment, the sensor 230 of the wearable device 101 may generate, from non-electronic information related to the wearable device 101, electrical information capable of being processed and/or stored by the processor 210 and/or the memory 215 of the wearable device 101. The information may be referred to as sensor data. The sensor 230 may include a global positioning system (GPS) sensor for detecting a geographic location of the wearable device 101, an image sensor, an audio sensor (e.g., a microphone and/or a microphone array including a plurality of microphones), an illuminance sensor, an inertial measurement unit (IMU) (e.g., an acceleration sensor, a gyro sensor and/or a geomagnetic sensor), and/or a time-of-flight (ToF) sensor (or a ToF camera). Like the ToF sensor, the wearable device 101 may include a sensor configured to detect a distance between the wearable device 101 and an external object. The sensor detecting a distance between external objects may be referred to as a depth sensor.

In an embodiment, a depth sensor included in the wearable device 101 may include a ToF sensor and/or a structured light (SL) sensor. The SL sensor may be referred to as an SL camera. The ToF sensor may be referred to as a ToF camera. The SL sensor may emit or output a light pattern (e.g., a plurality of dots) of a specific wavelength (e.g., an infrared wavelength). When an external object reflects the light pattern, the light pattern may be distorted by embossing of a surface of the external object. By detecting reflected light for the light pattern, the SL sensor and/or the processor 210 connected to the SL sensor may recognize the distortion. By using the distortion, the processor 210 may calculate a distance between the wearable device 101 and the external object. The ToF sensor may emit light of a specific wavelength (e.g., an infrared wavelength) in units of nanoseconds. The ToF sensor may measure a time during which light reflected by an external object is propagated to the ToF sensor. By using the measured time, the ToF sensor and/or the processor 210 may calculate or determine a distance between the external object and the wearable device 101. Information calculated by using the ToF sensor and/or the SL sensor may be referred to as a depth map.

In an embodiment, the communication circuitry 235 of the wearable device 101 may include circuitry for supporting transmission and/or reception of an electrical signal between the wearable device 101 and an external electronic device. The communication circuitry 235 may include, for example, at least one of a MODEM, an antenna, or an optic/electronic (O/E) converter. The communication circuitry 235 may support transmission and/or reception of an electrical signal based on various types of protocols such as ethernet, a local area network (LAN), a wide area network (WAN), wireless fidelity (WiFi), Bluetooth, bluetooth low energy (BLE), ZigBee, long term evolution (LTE), 5G new radio (NR), 6G, and/or above-6G. In an embodiment, the communication circuitry 235 may be referred to as a communication processor and/or a communication module.

According to an embodiment, one or more instructions (or commands) indicating data to be processed by the processor 210 of the wearable device 101, calculations and/or operations to be performed by the processor 210 of the wearable device 101 may be stored in the memory 215 of the wearable device 101. A set of one or more instructions may be referred to as a program, a firmware, an operating system, a process, a routine, a sub-routine, and/or a software application (hereinafter referred to as application). For example, the wearable device 101 and/or the processor 210 may perform at least one of operations of FIG. 3, when a set of a plurality of instruction distributed in a form of operating system, firmware, driver, program, and/or software application is executed. Hereinafter, a software application being installed within the wearable device 101 may mean that one or more instructions provided in a form of software application (or package) are stored in the memory 215, and that the one or more applications are stored in an executable format (e.g., a file with an extension designated by the operating system of the wearable device 101) by the processor 210. As an example, the application may include a program and/or a library, associated with a service provided to the user.

Referring to FIG. 2, programs installed in the wearable device 101 may be included in any one of different layers including an application layer 240, a framework layer 250, and/or a hardware abstraction layer (HAL) 280, based on a target. For example, programs (e.g., module or driver) designed to target a hardware (e.g., the display 110, the camera 130, the sensor 230, and/or the communication circuitry 235) of the wearable device 101 may be included in the hardware abstraction layer 280. In terms of including one or more programs for providing an extended reality (XR) service, the framework layer 250 may be referred to as an XR framework layer. For example, the layers illustrated in FIG. 2, which are logically separated (or separated for convenience of explanation), may not mean that an address space of the memory 215 is separated by the layers.

For example, programs (e.g., a location tracker 271, a space recognizer 272, a gesture tracker 273, and/or a gaze tracker 274) designed to target at least one of the hardware abstraction layer 280 and/or the application layer 240 may be included in the framework layer 250. The programs included in the framework layer 250 may provide an application programming interface (API) capable of being executed (or invoked (or called)) based on another program.

For example, a program designed to target a user of the wearable device 101 may be included in the application layer 240. An extended reality (XR) system user interface (UI) 241 and/or an XR application 242 are illustrated as an example of programs included in the application layer 240, but the embodiment is not limited thereto. For example, the programs (e.g., software application) included in the application layer 240 may cause execution of a function supported by programs included in the framework layer 250, by calling the API.

For example, the wearable device 101 may display, on the display 110, one or more visual objects for performing interaction with a user, based on execution of the XR system UI 241. The visual object may mean an object capable of being positioned within a screen for transmission of information and/or interaction, such as a text, an image, an icon, a video, a button, a check box, a radio button, a text box, a slider and/or a table. The visual object may be referred to as a visual guide, a virtual object, a visual element, a UI element, a view object, and/or a view element. The wearable device 101 may provide, to a user, functions available in a virtual space based on the execution of the XR system UI 241.

Referring to FIG. 2, it is illustrated that the XR system UI 241 includes a lightweight renderer 243 and/or an XR plug-in 244, but is not limited thereto. For example, the processor 210 may execute a lightweight renderer 243 and/or an XR plug-in 244 in the framework layer 250, based on the XR system UI 241.

For example, the wearable device 101 may obtain a resource (e.g., API, system process, and/or library) used to define, generate, and/or execute a rendering pipeline in which a partial change is allowed, based on the execution of the lightweight renderer 243. The lightweight renderer 243 may be referred to as a lightweight renderer pipeline, in terms of defining a rendering pipeline in which a partial change is allowed. The lightweight renderer 243 may include a renderer (e.g., a prebuilt renderer) built before execution of a software application. For example, the wearable device 101 may obtain a resource (e.g., API, system process, and/or library) used to define, generate, and/or execute the entire rendering pipeline, based on the execution of the XR plug-in 244. The XR plug-in 244 may be referred to as an open XR native client, in terms of defining (or setting) the entire rendering pipeline.

For example, the wearable device 101 may display, on the display 110, a screen representing at least a portion of a virtual space, based on the execution of the XR application 242. The XR plug-in 244-1 included in the XR application 242 may include instructions supporting a function similar to the XR plug-in 244 of the XR system UI 241. Among descriptions of the XR plug-in 244-1, a description overlapping those of the XR plug-in 244 may be omitted. The wearable device 101 may cause execution of a virtual space manager 251, based on execution of the XR application 242.

According to an embodiment, the wearable device 101 may provide a virtual space service, based on the execution of the virtual space manager 251. For example, the virtual space manager 251 may include a platform for supporting the virtual space service. Based on the execution of the virtual space manager 251, the wearable device 101 may identify a virtual space formed based on a user's location indicated by data obtained through the sensor 230, and may display at least a portion of the virtual space on the display 110. The virtual space manager 251 may be referred to as a composition presentation manager (CPM).

For example, the virtual space manager 251 may include a runtime service 252. As an example, the runtime service 252 may be referred to as an OpenXR runtime module (or OpenXR runtime program). The wearable device 101 may execute at least one of a user's pose prediction function, a frame timing function, and/or a space input function, based on the execution of the runtime service 252. As an example, the wearable device 101 may perform rendering for a virtual space service to a user, based on the execution of the runtime service 252. For example, a function associated with a virtual space executable by the application layer 240 may be supported based on the execution of runtime service 252.

For example, the virtual space manager 251 may include a pass-through manager 253. Based on the execution of the pass-through manager 253, the wearable device 101 may overlappingly display, while displaying a screen (e.g., the screen 120 of FIG. 1) representing a virtual space on display 110, an image and/or a video representing an actual space obtained through an external camera on at least a portion of the screen.

For example, the virtual space manager 251 may include an input manager 254. The wearable device 101 may identify data (e.g., sensor data) obtained by executing one or more programs included in a perception service layer 270, based on the execution of the input manager 254. The wearable device 101 may identify a user input associated with the wearable device 101, by using the obtained data. The user input may be associated with the user's motion (e.g., hand gesture), gaze, and/or speech identified by the sensor 230 and/or the camera 110 (e.g., an external camera). The user input may be identified based on an external electronic device connected (or paired) through the communication circuitry 235.

For example, a perception abstract layer 260 may be used for data exchange between the virtual space manager 251 and the perception service layer 270. In terms of being used for data exchange between the virtual space manager 251 and the perception service layer 270, the perception abstract layer 260 may be referred to as an interface. As an example, the perception abstraction layer 260 may be referred to as OpenPX. The perception abstraction layer 260 may be used for a perception client and a perception service.

According to an embodiment, the perception service layer 270 may include one or more programs for processing data obtained from the sensor 230 and/or the camera 130. One or more programs may include at least one of the location tracker 271, the space recognizer 272, the gesture tracker 273, and/or the gaze tracker 274. The type and/or number of one or more programs included in the perception service layer 270 is not limited as illustrated in FIG. 2.

For example, the wearable device 101 may identify a posture of the wearable device 101 by using the sensor 230, based on the execution of the location tracker 271. The wearable device 101 may identify 6 degrees of freedom pose (6 dof pose) of the wearable device 101 by using data obtained using an external camera and/or an IMU (e.g., gyro sensor, acceleration sensor, and/or geomagnetic sensor), based on the execution of the location tracker 271. The location tracker 271 may be referred to as a head tracking (HeT) module (or a head tracker or head tracking program).

For example, the wearable device 101 may obtain information for providing a three-dimensional virtual space corresponding to a surrounding environment (e.g., external space) of the wearable device 101 (or a user of the wearable device 101), based on the execution of the space recognizer 272. The wearable device 101 may reproduce the surrounding environment of the wearable device 101 in three dimensions, by using data obtained using an external camera (e.g., the camera 130), based on the execution of the space recognizer 272. The wearable device 101 may identify at least one of a plane, an inclination, and a step, based on the surrounding environment of the wearable device 101 reproduced in three dimensions based on the execution of the space recognizer 272. The space recognizer 272 may be referred to as a scene understanding (SU) module (or a scene recognition program).

For example, the wearable device 101 may identify (or recognize) a hand's pose and/or gesture of the user of the wearable device 101 based on the execution of the gesture tracker 273. For example, the wearable device 101 may identify a pose and/or a gesture of the user's hand by using data obtained from an external camera (e.g., the camera 130), based on the execution of the gesture tracker 273. As an example, the wearable device 101 may identify a pose and/or a gesture of the user's hand, based on data (or image) obtained using an external camera based on the execution of the gesture tracker 273. The gesture tracker 273 may be referred to as a hand tracking (HaT) module (or a hand tracking program) and/or a gesture tracking module.

For example, the wearable device 101 may identify (or track) eye movement of the user of the wearable device 101, based on the execution of the gaze tracker 274. For example, the wearable device 101 may identify the eye movement of the user, by using data obtained from a gaze tracking camera (e.g., the camera 130) based on the execution of the gaze tracker 274. The gaze tracker 274 may be referred to as an eye tracking (ET) module (or eye tracking program) and/or a gaze tracking module.

For example, the processor 210 of the wearable device 101 may perform calibration of a gaze position by executing a gaze calibrator 275. For example, the processor 210 may estimate or compensate for an error included in a gaze position calculated by an image of an eye of a user, obtained through the camera 130 (e.g., the first camera 130-1 and/or the second camera 130-2 of FIG. 1). The processor 210 may perform the calibration of the gaze position by at least partially changing information associated with the gaze position such that the error is reduced. The at least partially changed gaze position may be used for execution of the gaze tracker 274 of the processor 210. The at least partially changed gaze position may be used to receive a user input based on the gaze position. The processor 210 executing the gaze calibrator 275 may perform the calibration of the gaze position by using calibration information stored in the memory 215.

For example, by executing a virtual object controller 276, the processor 210 of the wearable device 101 may change an attribute of a virtual object (e.g., a position (e.g., two-dimensional coordinates and/or three-dimensional coordinates of the virtual object), a shape, a color, and/or a size of the virtual object) displayed on the display 110 while obtaining calibration information to be stored in the memory 215. The processor 210 executing the virtual object controller 276 may control the display 110 to change display of the virtual object according to the attribute. For example, the processor 210 may display a screen for obtaining the calibration information by changing a virtual object included in a screen displayed on the display 110.

In an embodiment, the virtual object controller 276 may include a virtual object position adjuster 291 and a validity determiner 292. The processor 210 may simultaneously execute the virtual object controller 276 and the gaze calibrator 275, and may control a flow of information between the virtual object controller 276 and the gaze calibrator 275. For example, a result of adjusting a position of a virtual object by using the virtual object position adjuster 291 may be transmitted to another program and/or hardware (e.g., the display 110) by being processed by the processor 210 executing the gaze calibrator 275. In an embodiment, the processor 210 may execute the virtual object controller 276 by using information (e.g., a gaze position) obtained by using the gaze calibrator 275.

In an embodiment, while changing the position of the virtual object in the display 110 by executing the virtual object controller 276, the processor 210 may obtain information indicating a gaze position within the display 110 (or a display area of the display 110) by executing the gaze tracker 274. The information may include two-dimensional coordinates and/or three-dimensional coordinates indicating the gaze position. The information may be generated based on a calibration algorithm executed by the gaze calibrator 275.

In an embodiment, by using the information (e.g., a result of calculating the gaze position) of the gaze calibrator 275, the processor 210 executing the virtual object controller 276 may initiate to change a position of a virtual object or may cease to change the position of the virtual object. For example, the processor 210 may determine whether to cease to change an attribute such as a position, a shape, a color, and/or a size of the virtual object by executing the gaze calibrator 275. The processor 210 may determine whether to execute a function mapped to the virtual object by executing the gaze calibrator 275. The processor 210 executing the gaze calibrator 275 may determine a time point at which changing the virtual object is ceased by using the gaze position obtained by using the gaze tracker 274. The time point determined by the gaze calibrator 275 may be used for control of the virtual object based on execution of the virtual object controller 276. Until the time point, the processor 210 executing the gaze calibrator 275 may store the gaze position obtained by using the gaze tracker 274, the position of the virtual object, and/or the image obtained from the camera 130 as calibration information.

In an embodiment, the calibration information obtained by using the gaze calibrator 275 may be used to determine calibration of the gaze position and/or validity of the gaze position. The processor 210 executing the validity determiner 292 may determine the validity of the gaze position. Based on the determined validity, the processor 210 may determine whether to cease to obtain calibration information. After ceasing to obtain the calibration information, the calibration information stored in the memory 215 may be used for the calibration of the gaze position.

Hereinafter, with reference to FIG. 3, an exemplary operation of the processor 210 performed to obtain calibration information will be described.

FIG. 3 illustrates a flowchart of a wearable device according to an embodiment. The wearable device 101 of FIG. 1 and/or FIG. 2 and/or the processor 210 of FIG. 2 may perform at least one of operations of FIG. 3. The operations of FIG. 3 may be associated with an operation of the wearable device executing the virtual object controller 276 of FIG. 2. An order in which the operations of FIG. 3 are performed is not limited to an order illustrated in FIG. 3. For example, the processor of the wearable device may perform the operations of FIG. 3 in an order different from the order illustrated in FIG. 3. For example, the processor of the wearable device may perform at least two operations among the operations of FIG. 3 substantially simultaneously.

Referring to FIG. 3, in operation 310, the processor of the wearable device according to an embodiment may display a virtual object (e.g., the virtual object o of FIG. 1). The processor of the wearable device may display the virtual object on a display (e.g., the display 110 of FIG. 2) of the wearable device. The virtual object of the operation 310 may be configured to execute a function associated with a user input. For example, the virtual object of the operation 310 may be displayed to receive a pattern input for unlocking.

Referring to FIG. 3, in operation 320, the processor of the wearable device according to an embodiment may determine a gaze position by using an image of an eye obtained from a camera (e.g., the camera 130 of FIG. 2). The processor may determine the gaze position of a user by using the image of the eye obtained from at least one camera (e.g., the first camera 130-1 and/or the second camera 130-2 of FIG. 1). The gaze position may be calculated based on execution of the gaze tracker 274 and/or the gaze calibrator 275 of FIG. 2.

Referring to FIG. 3, in operation 330, the processor of the wearable device according to an embodiment may detect a gaze position within a detection area associated with the virtual object. The detection area of the operation 330 may be set to start control of the virtual object. The detection area of the operation 330 may be referred to as a control start determination area. The processor may compare coordinates (e.g., two-dimensional coordinates) of the gaze position with coordinates of the detection area within the display. Based on the comparison, the processor may determine whether the gaze position is included within the detection area.

In an embodiment, the detection area of the operation 330 may be formed to include the virtual object within the display (or a display area of the display). For example, the detection area may have a shape of a circle surrounding the virtual object. The shape of the detection area is not limited to a circle. The detection area may be formed as a condition for determining whether the gaze position is included in a reference position. The detection area may have an irregular shape. For example, information for defining the detection area (e.g., dimensions such as a radius, a width, and/or a height of the detection area) may be stored in an electronic device or may be set by the electronic device. For example, a size of the detection area (e.g., a diameter and/or a radius of a circle) may be determined by using calibration information stored in the wearable device. For example, by using an error of the gaze position indicated by the calibration information, the processor may determine the size of the detection area such that a probability that the gaze position measured by the wearable device is included in the detection area exceeds a preset probability (e.g., 96%) when the user gazes at the virtual object. For example, the size of the detection area may be associated with accuracy of estimating an intention of the user gazing at the virtual object.

Referring to FIG. 3, in operation 340, the processor of the wearable device according to an embodiment may move the virtual object according to a displacement of the gaze position within the detection area (e.g., a vector indicating a change in position of the gaze position in a time domain). For example, the processor may perform the operation 340 based on whether the gaze position is included within the detection area. Referring to FIG. 3, when moving the virtual object by performing the operation 340, the processor may repeatedly perform operations 344 and 346 of FIG. 3.

Referring to FIG. 3, in operation 342, in response to detecting the gaze position entering the detection area, the processor of the wearable device according to an embodiment may move the virtual object by using the gaze position and a position of the virtual object. After detecting the gaze position within the detection area, when the gaze position is located within the detection area for a preset time (e.g., 0.5 seconds), the processor may perform the movement of the operation 342. When starting the movement of the operation 342, the processor may calculate a timing for ceasing the movement of the operation 342. The movement of the operation 342 may be performed only before the timing. The movement of the operation 342 may be ceased when the gaze position is moved out of the detection area before completion of the timing.

Referring to FIG. 3, in the operation 344, the processor of the wearable device according to an embodiment may move the virtual object by using the displacement of the gaze position according to movement of the gaze position. For example, the processor detecting the gaze position within the detection area including the virtual object may determine information indicating a displacement of the gaze position within the detection area. The processor may move the virtual object along a direction of the displacement. A distance of the virtual object moved along the direction may be lower than a size of the displacement. For example, the processor may move the virtual object by a size of the displacement to which a preset ratio is applied. The preset ratio may be set such that the virtual object is moved lower than the size of the displacement (e.g., a distance by which the gaze position is moved).

In an embodiment, the processor moving the virtual object by performing at least one of the operations 342 and 344 may store a result of tracking the gaze position. For example, the processor may store gaze positions detected at different time points. For example, the processor may store a gaze position at a first time point and a gaze position at a second time point, and may determine or calculate the displacement of the gaze position by using the gaze positions at the first time point and the second time point.

Referring to FIG. 3, in the operation 346, the processor of the wearable device according to an embodiment may determine whether to cease the movement of the virtual object by using a condition for ceasing the movement of the virtual object. The condition may be associated with the timing determined when moving the virtual object based on the operation 342. For example, in response to expiration of the timing, the processor may cease the movement of the virtual object. The condition may be associated with whether the distance by which the virtual object is moved based on the operation 344 is less than a threshold distance. The condition may be associated with whether the distance calculated based on the operation 344 is less than the threshold distance. For example, when the distance by which the virtual object is moved is less than the threshold distance, the processor may cease the movement of the virtual object. The condition may be associated with whether the gaze position is located within the detection area of the operation 330. For example, when the gaze position is moved out of the detection area, the processor may cease the movement of the virtual object.

In an embodiment, in the operation 346, when it is determined not to cease the movement of the virtual object, the processor may perform the operation 344 of FIG. 3 again. For example, when the condition for ceasing the movement of the virtual object is not satisfied, the processor may perform the operation 344 of FIG. 3 again. For example, when the timing is before expiration or the distance by which the virtual object is moved is greater than or equal to the threshold distance, the processor may perform the operation 344 of FIG. 3 again. The processor performing the operation 344 of FIG. 3 again may move the virtual object by using a displacement between a gaze position before performing the operation 346 and a gaze position obtained by performing the operation 344 again.

Referring to FIG. 3, in operation 350, the processor of the wearable device according to an embodiment may store information obtained while moving the virtual object as information for calibration of the gaze position. Based on cessation of moving the virtual object, the processor may store at least one of a position of the virtual object or a displacement of the gaze position, which are obtained while the virtual object is moved.

In an embodiment, based on the operation 346, the processor ceasing to move the virtual object may execute a function associated with the virtual object. For example, the processor may determine that a user input associated with the virtual object is received. For example, the processor may execute the function of the virtual object associated with the user input. For example, the user input may include an input that indicates selecting the virtual object.

In an embodiment, after storing the information of the operation 350 or after executing the function, based on detecting a gaze position adjacent to a position where the virtual object is displayed, the processor may perform the calibration associated with the gaze position by using the information (e.g., at least one of the position or the displacement of the virtual object) stored by performing the operation 350.

As described above, according to an embodiment, the processor of the wearable device may display the virtual object moved according to the displacement of the gaze position calculated at one or more time points. For example, the processor may move the virtual object in proportion to the displacement. The processor may obtain calibration information by tracking a gaze following the moved virtual object. The calibration information obtained by the processor may be used to improve accuracy of the gaze position. The processor may continuously check the gaze following the virtual object while moving the virtual object. For example, the processor may more accurately obtain the calibration information based on the moved virtual object.

Hereinafter, with reference to FIG. 4, a detection area formed to include a virtual object will be exemplarily described.

FIG. 4 illustrates a screen 420 displayed by a wearable device 101 according to an embodiment. The wearable device 101 of FIG. 1 and/or FIG. 2 and/or the processor 210 of FIG. 2 may perform at least one of operations of FIG. 4. The operation of FIG. 4 may be associated with the operations of FIG. 3.

Referring to FIG. 4, an exemplary state of the wearable device 101 worn by a user 410 is illustrated. According to an embodiment, the wearable device 101 may display, on a display (e.g., the display 110 of FIG. 2), an AR or VR-based screen 420. When displaying the AR-based screen 420 according to an embodiment, in a case that the wearable device 101 obtains an image and/or a video of an external environment through an external camera (e.g., the camera 130 of FIG. 2), the screen 420 displayed by the wearable device 101 may include an image 432 corresponding to an external object 430 included in the external environment.

According to an embodiment, a state of the wearable device 101 may include a locked state and an unlocked state. The locked state may include a state requiring authentication of the user 410 wearing the wearable device 101 for switching to the unlocked state, as in the exemplary screen 420 of FIG. 4. In the locked state, access to information stored in the wearable device 101 and/or execution of a software application of the wearable device 101 may be restricted or blocked. A screen (e.g., the screen 420 of FIG. 4) displayed in the locked state may be referred to as a lock screen. The screen displayed in the locked state may be referred to as an unlock screen in terms of being displayed for unlocking.

According to an embodiment, in a state of displaying the lock screen, the wearable device 101 may perform an operation for authentication. For example, in the locked state of the wearable device 101, the wearable device 101 may display one or more virtual objects configured to receive a pattern for switching (or changing) the locked state. Referring to the exemplary screen 420 of FIG. 4, the wearable device 101 may display virtual objects 441, 442, 443, 444, 445, 446, 447, 448, and 449 selectable by the user. Although the virtual objects 441, 442, 443, 444, 445, 446, 447, 448, and 449 having a shape of a circle and/or a dot are illustrated, an embodiment is not limited thereto. The wearable device 101 may display, in the screen 420, text guiding an input of information for the authentication (e.g., "Enter a pattern to unlock").

According to an embodiment, the wearable device 101 may receive an input for connecting at least two virtual objects among the virtual objects 441, 442, 443, 444, 445, 446, 447, 448, and 449. By using a pattern in which at least two virtual objects among the virtual objects 441, 442, 443, 444, 445, 446, 447, 448, and 449 indicated by the input are connected, the wearable device 101 may authenticate the user. For example, the wearable device 101 may authenticate the user of the wearable device 101 by comparing an order in which the at least two virtual objects are connected and/or a shape of the virtual objects connected to each other, which are indicated by the input, with a pre-registered order and/or shape. Based on the authentication, the wearable device 101 may switch from the locked state to the unlocked state.

According to an embodiment, the operation performed by the wearable device 101 to authenticate the user may not be limited to a pattern input based on the virtual objects 441, 442, 443, 444, 445, 446, 447, 448, and 449 included in the screen 420. The wearable device 101 may authenticate the user 410 wearing the wearable device 101 by using biometric information such as a fingerprint, a face, and/or an iris.

According to an embodiment, the wearable device 101 may obtain calibration information by using the virtual objects 441, 442, 443, 444, 445, 446, 447, 448, and 449 for unlocking the wearable device 101, as in the screen 420 of FIG. 4. For example, the wearable device 101 may receive the input for connecting at least two virtual objects among the virtual objects 441, 442, 443, 444, 445, 446, 447, 448, and 449 based on movement of a gaze position. Together with the input, the wearable device 101 may store information associated with the gaze position tracked for the input as calibration information.

Referring to FIG. 4, by using detection areas respectively formed in the virtual objects 441, 442, 443, 444, 445, 446, 447, 448, and 449, the wearable device 101 may detect or determine a gaze position toward any one of the virtual objects 441, 442, 443, 444, 445, 446, 447, 448, and 449. Referring to FIG. 4, a detection area 451 corresponding to the virtual object 441 is exemplarily illustrated. The detection area 451 and the virtual object 441 may be concentric circles. A position of the detection area 451 (or a position of a center of the detection area 451) may be fixed to a position of a center of the virtual object 441. For example, the detection area 451 may not be visible through the screen 420. In portions of the screen 420 in which the other virtual objects 442, 443, 444, 445, 446, 447, 448, and 449 different from the virtual object 441 are respectively displayed, detection areas similar to the detection area 451 may be formed.

In an embodiment, a size (e.g., a radius, a diameter, and/or extent) of the detection area 451 having a shape surrounding the virtual object 441 may be determined by using the calibration information (e.g., the calibration information obtained by the wearable device 101). For example, the wearable device 101 may determine the size of the detection area 451 by using information indicating an error of a gaze position at a position of the screen 420 where the virtual object 441 is displayed. The information indicating the error of the gaze position may be included in the calibration information. For example, the size of the detection area 451 may be set such that a probability that the gaze position is included in the detection area 451 exceeds a preset probability when the user gazes at the virtual object 441, as described above with reference to the operation 330 of FIG. 3.

In an embodiment, in a state in which the plurality of virtual objects 441, 442, 443, 444, 445, 446, 447, 448, and 449 are displayed, the wearable device 101 may track or identify a gaze position. When the gaze position is spaced apart from all of the detection areas (e.g., the detection area 451) respectively corresponding to the plurality of virtual objects 441, 442, 443, 444, 445, 446, 447, 448, and 449, the wearable device may not react to the gaze position or may not execute any function.

In an exemplary state of displaying the screen 420 of FIG. 4, the wearable device 101 may move the virtual object 441 based on detecting the gaze position included in the detection area 451. The wearable device 101 may determine or change a position of the virtual object 441 within a movable area 461 by using a distance by which the gaze position is moved within the detection area 451 and/or a direction in which the gaze position is moved within the detection area 451. For example, the wearable device 101 may move a virtual object in parallel or shift the virtual object within the movable area 461.

Referring to FIG. 4, the movable area 461 having a size different from the detection area 451 and having a center at least partially coincident with a center of the detection area 451 and/or the virtual object 441 is exemplarily illustrated. For example, although the movable area 461 having a shape of a circle concentric with the virtual object 441 and/or the detection area 451 is illustrated, a shape, a position, and/or a size of the movable area 461 is not limited to an embodiment of FIG. 4. For example, the movable area 461 may coincide with the detection area 451. Moving the virtual object 441 based on the gaze position included in the detection area 451 may be ceased or may be terminated when the virtual object 441 contacts a boundary line and/or an edge of the movable area 461. Shapes of the virtual object 441, the detection area 451, and/or the movable area 461 are not limited to shapes of concentric circles illustrated in FIG. 4.

As described above, according to an embodiment, the wearable device 101 may simultaneously receive an input for unlocking and calibration information by using the virtual objects 441, 442, 443, 444, 445, 446, 447, 448, and 449 included in the lock screen. For example, the wearable device 101 may receive the input for unlocking based on movement of the gaze position. While receiving the input, the wearable device 101 may cause a motion of an eye of the user 410 following a virtual object (or a virtual object indicated as being focused by the gaze position) by moving any one virtual object corresponding to the input. The wearable device 101 may store an image and/or a video of the eye while the motion occurs as calibration information on the gaze position.

In an embodiment, by combining a function for collecting calibration information with a virtual object displayed for an essential function, such as the virtual objects 441, 442, 443, 444, 445, 446, 447, 448, and 449 of the lock screen, the wearable device 101 may obtain the calibration information more naturally. For example, without displaying a UI dedicated for providing calibration information, the wearable device 101 may obtain the calibration information.

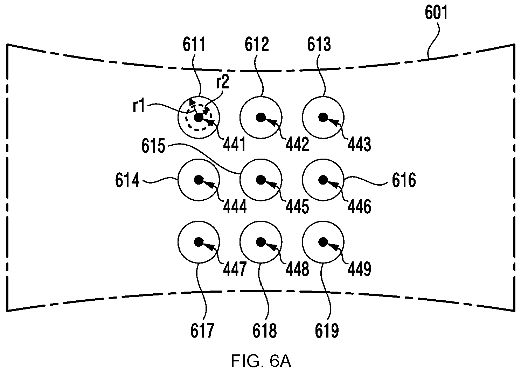

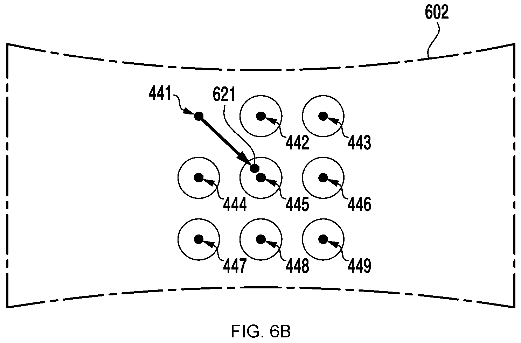

Hereinafter, with reference to FIGS. 5A to 5D, 6A, and/or 6B, an exemplary operation of the wearable device 101 moving a virtual object by using a gaze position will be described.

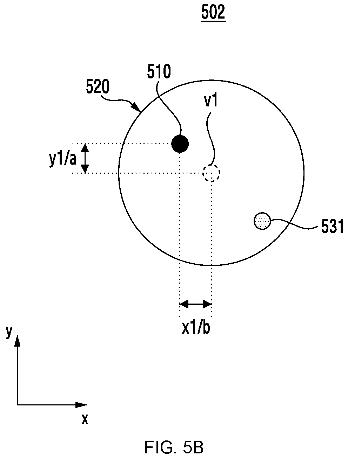

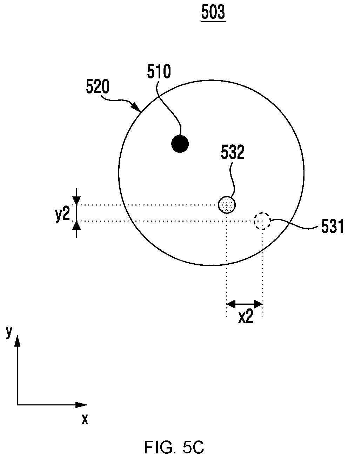

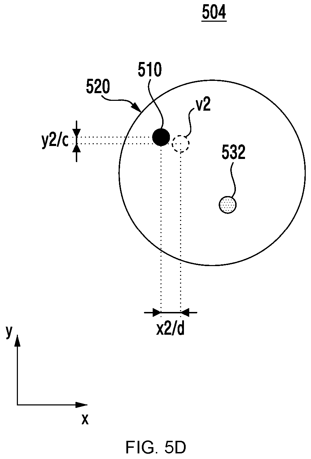

FIGS. 5A, 5B, 5C, and 5D illustrate states of a wearable device detecting a gaze position. The wearable device 101 of FIG. 1 and/or FIG. 2 and/or the processor 210 of FIG. 2 may perform an operation of the wearable device described with reference to FIGS. 5A to 5D. The operation of FIGS. 5A to 5D may be associated with at least one of the operations of FIG. 3 (e.g., the operation 340 and/or the operations 342, 344, and 346).

Referring to FIGS. 5A to 5D, exemplary states 501, 502, 503, and 504 of the wearable device displaying a virtual object 510 are illustrated. In the state 501 in which the virtual object 510 is displayed on the display 110 of FIG. 2, the wearable device may identify or check a gaze position by using a camera (e.g., the camera 130 of FIG. 2). Identifying the gaze position may be performed based on execution of the gaze calibrator 275 of FIG. 2. The virtual object 510 of FIG. 5A, which is a virtual object displayed on the display to receive a user input, may include the virtual objects 441, 442, 443, 444, 445, 446, 447, 448, and 449 of FIG. 4.

According to an embodiment, the wearable device detecting a gaze position 531 in a state in which the virtual object 510 is displayed may determine whether to move the virtual object 510 by using a positional relationship between the gaze position 531 and a detection area 520. Determining whether to move the virtual object 510 may be performed based on execution of the virtual object controller 276 of FIG. 2. In an embodiment, the detection area 520 may not be displayed in the display. In an embodiment, the detection area 520 may have a preset transparency (e.g., 100% or a transparency exceeding 0%), a preset alpha value, and/or a preset color.

In the state 501 of FIG. 5A, the wearable device 101 detecting the gaze position 531 located in the detection area 520 formed around the virtual object 510 may determine whether the gaze position 531 is located within the detection area 520 for a preset period (e.g., approximately 0.5 seconds). Even when a user gazes at the virtual object 510, due to an error associated with the gaze position 531, the gaze position 531 calculated by the wearable device may be spaced apart from the virtual object 510. For example, since the gaze position 531 may be incorrectly determined as being located within the detection area 520 according to eye blinking and/or sudden movement of an eye, the wearable device 101 may measure a period during which the gaze position 531 is maintained within the detection area 520. When the measured period exceeds the preset period, the wearable device may determine to move the virtual object 510 by using the gaze position 531.

For example, when determining to move the virtual object 510 by using the gaze position 531, the wearable device may calculate or identify a position difference between the gaze position 531 and the virtual object 510. In the exemplary state 501 of FIG. 5A, the wearable device may calculate a position difference x1 between the gaze position 531 and the virtual object 510 on an x-axis and a position difference y1 between the gaze position 531 and the virtual object 510 on a y-axis. By using the position differences x1 and y1 on the x-axis and the y-axis, respectively, the wearable device may move the virtual object 510. Independently of the movement of the virtual object 510, a position, a shape, and/or a size of the detection area 520 in the display may be maintained or fixed. Moving the virtual object 510 may be performed based on execution of the virtual object position adjuster 291 of FIG. 2. The wearable device may determine a distance and/or a direction for moving the virtual object 510 by using the gaze position 531 calculated using the gaze calibrator 275 of FIG. 2.

Referring to FIG. 5B, the state 502 after the wearable device moves the virtual object 510 by using the position differences x1 and y1 on the x-axis and the y-axis, respectively, is illustrated. A point v1 of FIG. 5B may indicate a position of the virtual object 510 in the state 501 before the state 502. For example, while switching from the state 501 to the state 502, the wearable device may move the virtual object 510 along the y-axis by y1/a and may move the virtual object 510 along the x-axis by x1/b. While switching from the state 501 to the state 502, a direction in which the virtual object 510 moves may correspond to a direction from the gaze position 531 toward the virtual object 510 in the state 501. In the example, the a and the b may be integers (or real numbers) exceeding 1. In the example, the a and the b may be equal to each other. Since the a and the b exceed 1, a distance by which the virtual object 510 moves may be lower than a distance between the gaze position 531 and the virtual object 510. The a and/or the b may be determined based on reliability and/or accuracy associated with a calculation of the gaze position 531 indicated by calibration information stored in the wearable device.

In an embodiment, since the virtual object 510 is moved while switching from the state 501 to the state 502, a gaze of the user gazing at the virtual object 510 may also be moved. In the exemplary state 503 of FIG. 5C, the wearable device according to an embodiment may calculate or check a gaze position 532 of the user moved to gaze at the virtual object 510. The wearable device may determine whether to move the virtual object 510 by using a position difference and/or a displacement between the gaze position 531 calculated before the state 503 (e.g., in the states 501 and 502) and the gaze position 532 in the state 503. Determining whether to move the virtual object 510 may be performed based on execution of the validity determiner 292 of FIG. 2.

Referring to FIG. 5C, the gaze position 532 has been moved along the x-axis by x2 with respect to the gaze position 531 before the state 503. The gaze position 532 has been moved along the y-axis by y2 with respect to the gaze position 531 before the state 503. The wearable device according to an embodiment may calculate a position difference x2 between the gaze positions 531 and 532 on the x-axis and a position difference y2 between the gaze positions 531 and 532 on the y-axis. After starting movement of the virtual object 510, the wearable device may change a position, a shape, a color, and/or a size of the virtual object 510 by using a displacement (e.g., a movement direction and/or a movement distance) of the gaze position 532 in a time domain. For example, in the state 503 in which the gaze position 532 moved by x2 on the x-axis and moved by y2 on the y-axis is detected, the wearable device may move the virtual object 510 by using a preset ratio (e.g., 1/a) on the x-axis and a preset ratio (e.g., 1/b) on the y-axis.

Referring to FIG. 5D, the state 504 in which the wearable device moves the virtual object 510 by using the displacement (e.g., (x2, y2)) of the gaze position 532 detected in the state 503 is illustrated. While switching from the state 503 to the state 504, the wearable device may move the virtual object 510 along the y-axis by y2/c and may move the virtual object 510 along the x-axis by x2/d. For example, the a, the b, the c, and the d of FIGS. 5B and 5D may be integers (or real numbers) greater than 1. For example, the a, the b, the c, and the d of FIGS. 5B and 5D may be equal to each other. For example, the a and the c of FIGS. 5A and 5D may be equal to each other. For example, the b and the d of FIGS. 5A and 5D may be equal to each other. For example, the a, the b, the c, and the d of FIGS. 5A and 5D may be pre-determined values. For example, the a, the b, the c, and the d of FIGS. 5A and 5D may be determined according to reliability of a gaze position determined by a gaze calibrator (e.g., the gaze calibrator 275 of FIG. 2). While switching from the state 503 to the state 504, a direction in which the virtual object 510 moves may correspond to a direction of the displacement of the gaze position 532 detected in the state 503. As described above with reference to FIG. 5B, since the a and the b are integers (or real numbers) exceeding 1, the distance by which the virtual object 510 moves may be lower than a size of the displacement of the gaze position 532.

As described above with reference to FIGS. 5A to 5D, the wearable device may move the virtual object 510 by using the displacement of the gaze position 532 and/or the position of the virtual object 510. When the user gazes at the virtual object 510, since the distance by which the virtual object 510 is moved is lower than the size of the displacement of the gaze position 532, a movement distance of the virtual object 510 moved based on a distance by which the gaze position 532 is moved may be gradually reduced. For example, the position of the virtual object 510 may be converged.

According to an embodiment, when the distance by which the virtual object 510 is moved is reduced to be less than a preset threshold distance, the wearable device may cease to move the virtual object 510. According to an embodiment, when the virtual object 510 contacts a boundary line of a movable area (e.g., the movable area 461 of FIG. 4) corresponding to the virtual object 510 and/or is moved out of the movable area, the wearable device may cease to move the virtual object 510 according to the displacement of the gaze position 532. According to an embodiment, the wearable device may move the virtual object 510 for a preset period calculated in the state 501 in which the virtual object 510 is initially detected within the detection area 520, and may cease to move the virtual object 510 in response to expiration of the preset period. According to an embodiment, the wearable device may cease to move the virtual object 510 based on whether a distance calculated to move the virtual object 510 is less than a threshold distance. For example, when the calculated distance is less than the threshold distance, the processor may cease to move the virtual object 510.

In an embodiment, the wearable device determining to cease to move the virtual object 510 may move the virtual object 510 spaced apart from a center of the detection area 520 back to the center. For example, based on cessation of moving the virtual object 510, the wearable device may display the virtual object 510 at a position displayed before detecting the gaze position 531 within the detection area 520.

In an embodiment, when the distance by which the virtual object 510 is moved exceeds the preset threshold distance, when the virtual object 510 is located within the movable area, or before expiration of the preset period, the wearable device may continuously move the virtual object 510 within the detection area 520. For example, based on an update of a gaze position after the state 504, the wearable device may move the virtual object 510 by using the updated gaze position and the displacement of the gaze position 532. For example, by applying the above-described preset ratios (e.g., 1/b and 1/a) to an x-axis size and a y-axis size of the displacement, respectively, the wearable device may calculate a movement distance of the virtual object 510 in each of the x-axis and the y-axis. The wearable device may move the virtual object 510 according to the calculated movement distance.

In the state 504 of FIG. 5D, when ceasing to move the virtual object 510, the wearable device may store a position of the virtual object 510 in the state 504 (e.g., a position of the virtual object 510 at a timing of ceasing to move the virtual object 510). A position of the virtual object 510 within the detection area 520 in the state 504 and/or a position difference (or a displacement) of the virtual object 510 with respect to the center of the detection area 520 may be stored as calibration information.

Referring to FIGS. 5A to 5D, a position of the virtual object 510 in the states 501, 502, 503, and 504 in which a gaze position (e.g., the gaze positions 531 and 532) is detected within the detection area 520 may be stored in memory (e.g., the memory 215 of FIG. 2) of the wearable device as calibration information. In an embodiment, a result of moving the virtual object 510 by using a positional relationship between the virtual object 510 and the gaze position 531 (e.g., a result of moving the virtual object 510 in the state 502 of FIG. 5B) may be compared with another result of moving the virtual object 510 according to a displacement of a gaze position (e.g., a result of moving the virtual object 510 in the state 503 of FIG. 5C). Based on the comparison, the wearable device may determine whether to store (or use) the result of moving the virtual object 510 by using the positional relationship between the virtual object 510 and the gaze position 531. For example, when the result is similar to the another result, the wearable device may store the result as calibration information.

As described above, the wearable device may start moving the virtual object 510 in the state 501 in which the gaze position 531 maintained within the detection area 520 is detected. When starting to move the virtual object 510, the wearable device may move the virtual object 510 by using the positional relationship between the virtual object 510 and the gaze position 531. After moving the virtual object 510 by using the positional relationship, the wearable device may move the virtual object 510 by using the displacement of the gaze position (e.g., the displacement of the gaze positions 531 and 532 in each of the states 503 and 502). For example, the virtual object 510 may be moved according to a difference between a current gaze position and another gaze position detected before the current gaze position. In order to prevent the virtual object 510 from diverging, the wearable device may limit the movement distance of the virtual object 510 to be lower than a size of the displacement of the gaze position.

According to an embodiment, while moving the virtual object 510, the wearable device may check a condition for ceasing to move the virtual object 510. Ceasing to move the virtual object 510 may indicate that obtaining calibration information based on the movement of the virtual object 510 is ceased. Ceasing to move the virtual object 510 may indicate that a function associated with the virtual object 510 (or mapped to the virtual object 510) is executed. Hereinafter, with reference to FIGS. 6A and/or 6B, an exemplary operation in which the wearable device, which starts to move the virtual object 510, ceases to move the virtual object 510 will be described.

FIGS. 6A and 6B illustrate an operation of a wearable device executing a function associated with a virtual object 441 by using a gaze position. The wearable device 101 of FIG. 1 and/or FIG. 2 and/or the processor 210 of FIG. 2 may perform the operation of the wearable device described with reference to FIG. 6A and/or FIG. 6B. The operation of FIGS. 6A to 6B may be associated with at least one of the operations of FIG. 3 (e.g., operation 346).

Referring to FIGS. 6A and/or 6B, different states 601 and 602 of a lock screen including virtual objects 441, 442, 443, 444, 445, 446, 447, 448, and 449 are illustrated. The wearable device may display, together with the virtual objects 441, 442, 443, 444, 445, 446, 447, 448, and 449, virtual objects 611, 612, 613, 614, 615, 616, 617, 618, and 619 having a shape surrounding each of the virtual objects 441, 442, 443, 444, 445, 446, 447, 448, and 449. The virtual objects 611, 612, 613, 614, 615, 616, 617, 618, and 619 may have a radius of r1, and may be respectively aligned with center points of the virtual objects 441, 442, 443, 444, 445, 446, 447, 448, and 449.

According to an embodiment, based on detecting a gaze position associated with a specific virtual object among the virtual objects 441, 442, 443, 444, 445, 446, 447, 448, and 449, the wearable device 101 may gradually change an attribute (e.g., at least one of a size, a shape, and/or a color) of any one virtual object associated with the specific virtual object among the virtual objects 611, 612, 613, 614, 615, 616, 617, 618, and 619. In order to provide visual feedback with respect to a period of gazing at the specific virtual object, the wearable device may gradually change the attribute.

In the exemplary state 601 of FIG. 6A, the wearable device detecting a gaze position included in a detection area corresponding to the virtual object 441 may reduce a size of the virtual object 611 corresponding to the virtual object 441. For example, the wearable device may gradually reduce a radius of the virtual object 611 from r1 to a radius less than the r1 (e.g., r2). For example, the radius of the virtual object 611 may be gradually reduced from r1 to 0 (or a radius of the virtual object 441) to indicate expiration of a timing described with reference to the operation 346 of FIG. 3. For example, an end time point of a time section in which the radius of the virtual object 611 is reduced may be equal to the timing described with reference to the operation 346 of FIG. 3. At the end time point, since the radius of the virtual object 611 is 0 or is less than or equal to the radius of the virtual object 441, the virtual object 611 may disappear or be hidden in a screen.

In an embodiment, the wearable device detecting the gaze position included in the detection area corresponding to the virtual object 441 may gradually change a color of the virtual object 441. For example, in the state 601 in which the virtual objects 441, 442, 443, 444, 445, 446, 447, 448, and 449 of a first preset color (e.g., black) are displayed, the wearable device detecting the gaze position included in the detection area corresponding to the virtual object 441 may gradually change the color of the virtual object 441 to a second preset color (e.g., a primary color such as red) different from the first preset color. An end time point of a time section in which the color of the virtual object 441 is changed from the first preset color to the second preset color may be equal to the timing described with reference to the operation 346 of FIG. 3. Based on expiration of the timing, the wearable device may display the virtual object 441 of the second preset color. An embodiment is not limited thereto, and the wearable device may play a visual effect (e.g., an animation) indicating that movement of the virtual object 441 is ceased, based on expiration of a preset time section for moving the virtual object 441.

Referring to FIG. 6B, the state 602 after moving the virtual object 441 is ceased is illustrated. When ceasing to move the virtual object 441, the wearable device may determine that an input for selecting the virtual object 441 is received. Based on the determination, the wearable device may set a size, a shape, a position, and/or the color of the virtual object 441 to a preset size, a preset shape, a preset position, and/or a preset color indicating that the input has been received.

In the state 602, the wearable device may display a virtual object having a shape of a line extending from the virtual object 441 to a gaze position 621 detected in the state 602. In the state 602, based on detecting the gaze position 621 included in a detection area of the virtual object 445, the wearable device may start to move the virtual object 445, as described above with reference to FIGS. 3, 5A to 5D, and/or 6A.

As described above, when a user moves a gaze along the virtual objects 441, 442, 443, 444, 445, 446, 447, 448, and 449 of the lock screen, a portion among the virtual objects 441, 442, 443, 444, 445, 446, 447, 448, and 449 may be sequentially selected. The wearable device may display a virtual object (or a visual object) that indicates selecting the portion, such as the line of FIG. 6B extending from the virtual object 441 to the gaze position 621. When a pattern indicated by the line matches a pattern pre-registered in the wearable device, the wearable device may complete authentication based on the pattern. Based on completion of the authentication, the wearable device may switch to a state (e.g., an unlocked state) different from a locked state.

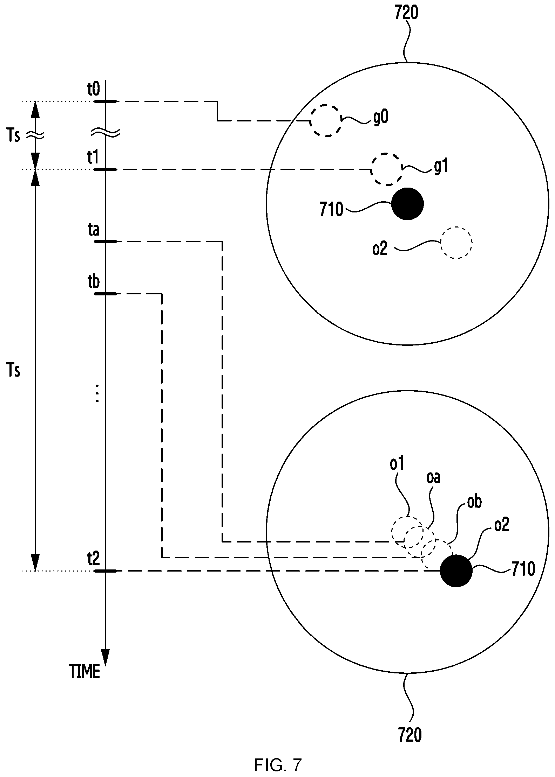

In an embodiment, a timing of controlling a display (e.g., a frame rate based on a unit of frames per second (fps)) and a timing of calculating a gaze position (e.g., a period of analyzing an image obtained from a camera) may be different from each other or may be independently changed. Hereinafter, with reference to FIG. 7, an exemplary operation of the wearable device associated with a difference between a timing of updating a gaze position and a timing of controlling the display will be described.

FIG. 7 illustrates an operation of a wearable device moving a virtual object 710 according to a gaze position. The wearable device 101 of FIG. 1 and/or FIG. 2 and/or the processor 210 of FIG. 2 may perform the operation of the wearable device described with reference to FIG. 7. The operation of the wearable device described with reference to FIG. 7 may be associated with at least one of the operations of FIG. 3 (e.g., the operations 340, 342, and 344).

In an embodiment of FIG. 7, the wearable device may update or calculate a gaze position based on a period of Ts (e.g., a period of 1/10 seconds). Although an embodiment of periodically tracking the gaze position is described, an embodiment is not limited thereto. In an embodiment, the wearable device may control a display (e.g., the display 110 of FIG. 2) by using a frame rate (e.g., 60 Hz and/or 120 Hz) less than the period of Ts. For example, the wearable device may be configured to update a screen displayed on the display according to the frame rate.

Referring to FIG. 7, an exemplary state of the wearable device displaying the virtual object 710 is illustrated. By comparing a detection area 720 including the virtual object 710 and a gaze position, the wearable device may determine whether to move the virtual object 710. The wearable device determining to move the virtual object 710 may determine speed and/or a velocity for moving the virtual object 710 by using the period of Ts in which the gaze position is updated, in order to continuously move the virtual object 710. For example, during a time section (in an embodiment of FIG. 7, the period of Ts) in which the gaze position is updated, the wearable device may move the virtual object 710 such that the virtual object 710 is moved by a distance less than the size of the displacement.

Referring to an exemplary case of FIG. 7, the wearable device detecting a gaze position g0 at a time point t0 may detect a gaze position g1 at a time point t1 after the period of Ts after the time point t0. As described above with reference to FIGS. 5A to 5D, the wearable device may calculate or determine a position o2 to which the virtual object 710 is to be moved by using a displacement of the gaze positions g0 and g1. The position o2 may be a position moved from the virtual object 710 displayed at the time point t1 along a direction of the displacement by a size of the displacement to which a preset ratio is applied. At the time point t1 at which the position o2 is calculated, when the virtual object 710 is immediately moved to the position o2, the virtual object 710 may be stopped from the time point t1 to a time point t2 after the period of Ts. That is, the virtual object 710 may be discretely moved according to the period of Ts. When gazing at the virtual object 710 discretely moved, a sudden eye movement following the virtual object 710 may cause fatigue of a user.

According to an embodiment, the wearable device may smoothly move the virtual object 710 to reduce the fatigue of the user. For example, the wearable device determining to move the virtual object 710 to the position o2 may determine a velocity and/or a position of the virtual object 710 to be moved to the position o2 according to the frame rate. For example, when current coordinates of the virtual object 710 at the time point t1 are (r1, s1) and coordinates of the position o2 are (r2, s2), coordinates (r, s) of the virtual object 710 at a time point t between the t1 and the t2 may be calculated or determined as in Equation 1. [Equation 1] $\left(r, s\right) = \left(\begin{matrix}{r}_{1} + \left({r}_{2}-{r}_{1}\right) \times \frac{t - {t}_{1}}{{t}_{2} - {t}_{1}} , \\ {s}_{1} + \left({s}_{2}-{s}_{1}\right) \times \frac{t - {t}_{1}}{{t}_{2} - {t}_{1}}\end{matrix}\right)$

For example, when the current coordinates (or a current position) of the virtual object 710 are (r1, s1), and a position to which the virtual object 710 is to be moved is determined as (r2, s2), the wearable device may determine a position of the virtual object 710 for each frame of the display according to a frequency of the display. In the example, when the frequency of the display is 60 Hz, it may be that t2 = t1 + 1/60. In the example, in order to smoothly represent the movement of the virtual object 710, it may be defined as t2 = t1 + ta, and the ta may be set to a value greater than 1/60. In the example, when ta = 1/10, the coordinates (r, s) (or a position) of the virtual object 710 at the time point t within t1 ≤ t ≤ t2 may be determined based on the Equation 1.

In an embodiment, the wearable device sequentially displaying frames distinguished by the frame rate may calculate or determine current coordinates (rₜ, sₜ) of the virtual object 710 with respect to coordinates (rₜ₋₁, sₜ₋₁) of the virtual object 710 in an immediately preceding frame during a time section between the t1 and the t2, as in Equation 2. [Equation 2] $\left({r}_{t}, {s}_{t}\right) = \left(\begin{matrix}{r}_{t - 1} + \left({r}_{2}-{r}_{t - 1}\right) \times α , \\ {s}_{t - 1} + \left({s}_{2}-{s}_{t - 1}\right) \times β\end{matrix}\right)$

According to an embodiment, the *α* and the *β* of Equation 2 may be real numbers greater than 0 and less than 1. The wearable device determining the position of the virtual object 710 by using Equation 1 and/or Equation 2 may gradually move the virtual object 710 during the period of Ts from the time point t1. Referring to FIG. 7, at a time point ta after the time point t1, the wearable device may move the virtual object 710 from the position o1 at the time point t2 to a position oa. At a time point tb after the time point ta, the wearable device may move the virtual object 710 from the position oa at the time point ta to a position ob. The positions oa and ob of the virtual object 710 at the time points ta and tb may be located on a line connecting the position o1 of the virtual object 710 at the time point t1 and the calculated position o2 of the virtual object 710. At the time point t2 after the period of Ts after the time point t1, the wearable device may display the virtual object 710 at the position o2. By using the gaze position updated at the time point t2, the wearable device may newly calculate a position of the virtual object 710. Toward the newly calculated position, the wearable device may gradually move the virtual object 710 according to the frame rate.

According to an embodiment, in an embodiment of gradually moving the virtual object 710, a first position of the virtual object 710 at a first timing at which an image is obtained by using a gaze tracking camera (e.g., the camera 130 of FIG. 2) and a second position of the virtual object 710 at a second timing at which a gaze position is obtained by using the image may be different. In this case, since the gaze position calculated at the second timing corresponds to a gaze position of the user gazing at the virtual object 710 displayed at the first position, the wearable device may store a pair of the gaze position calculated at the second timing and the first position of the virtual object 710 as calibration information.

According to an embodiment, in an embodiment of gradually moving the virtual object 710, since a gaze gazing at the virtual object 710 gradually moves along the virtual object 710, the wearable device may remove or reduce noise of the gaze position calculated from the gaze tracking camera. For example, while gradually moving the virtual object 710, the wearable device may reduce a frequency of obtaining the image from the gaze tracking camera to obtain the gaze position by increasing a period of updating the gaze position (e.g., the period of Ts). For example, the wearable device may increase the period and may calculate the gaze position by selecting an image including relatively little noise from among images received within the period. For example, the wearable device may exclude or remove an image including relatively large noise from among the images received within the increased period.

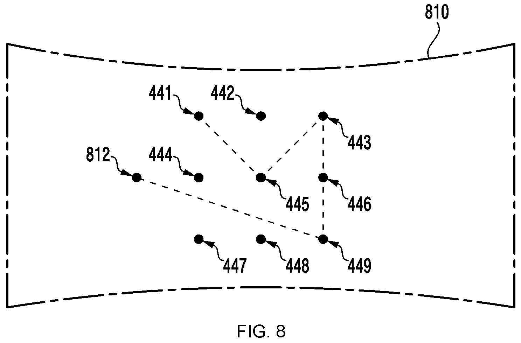

FIG. 8 illustrates an operation of a wearable device displaying a virtual object 812 associated with a gaze position on a lock screen 810. The wearable device 101 of FIG. 1 and/or FIG. 2 and/or the processor 210 of FIG. 2 may perform the operation of the wearable device described with reference to FIG. 8. The operation of the wearable device described with reference to FIG. 8 may be associated with at least one of the operations of FIG. 3.

Referring to FIG. 8, an exemplary state of the lock screen 810 displayed on a display (e.g., the display 110 of FIG. 2) is illustrated. Referring to FIG. 8, based on the operation described with reference to FIGS. 3, 5A to 5D, 6A, and/or 6B, among the virtual objects 441, 442, 443, 444, 445, 446, 447, 448, and 449 for receiving a pattern, the virtual objects 441, 445, 443, 446, and 449 may be sequentially selected. For example, by using gaze positions continuously measured in the screen 810, the wearable device may detect or receive an input for sequentially selecting the virtual objects 441, 445, 443, 446, and 449.

According to an embodiment, the wearable device may further display a virtual object 812 for obtaining calibration information associated with a specific position of the display. For example, it is assumed that a pattern sequentially connecting the virtual objects 441, 445, 443, 446, and 449 illustrated in FIG. 8 matches a pre-registered pattern by authenticating a user of the wearable device. In the assumption, the wearable device identifying the pattern matching the pre-registered pattern may determine whether to add the virtual object 812 for obtaining the calibration information by using calibration information stored (or accumulated) in the wearable device. For example, when an error of a gaze position indicated by the calibration information is relatively large in a specific portion of the display, the wearable device may display the virtual object 812 in the specific portion.

Referring to FIG. 8, an exemplary state in which the virtual object 812 is displayed in the portion having the relatively large error is illustrated. The wearable device may display the virtual object 812 in a portion in which the error indicated by the calibration information exceeds a preset threshold value or in a portion having the largest error. When the error indicated by the calibration information is less than a threshold value at a position of the display, the wearable device may not display the virtual object 812.

Referring to FIG. 8, in a state of further displaying the virtual object 812, the wearable device may switch from a locked state to an unlocked state based on a user input associated with the virtual object 812. The user input may be identified based on a gaze position included in a detection area associated with the virtual object 812. For example, the wearable device detecting the gaze position included in the detection area may perform the operation described above with reference to FIGS. 5A to 5D and/or FIGS. 6A to 6B. For example, the wearable device may move the virtual object 812 according to a displacement of the gaze position and may obtain or store calibration information while the virtual object 812 is moved.

As described above, according to an embodiment, the wearable device may add, to the lock screen 810, the virtual object 812 different from the virtual objects 441, 442, 443, 444, 445, 446, 447, 448, and 449 for receiving a pattern, in order to obtain calibration information. By using the added virtual object 812, the wearable device may obtain calibration information in the specific portion of the display in which the virtual object 812 is displayed, together with authentication.

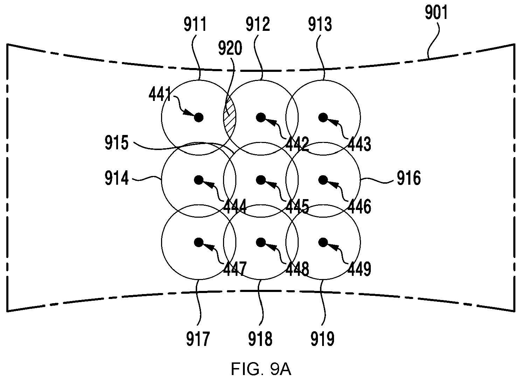

Hereinafter, with reference to FIGS. 9A to 9D, an operation of the wearable device in an embodiment in which detection areas of virtual objects overlap each other will be described.

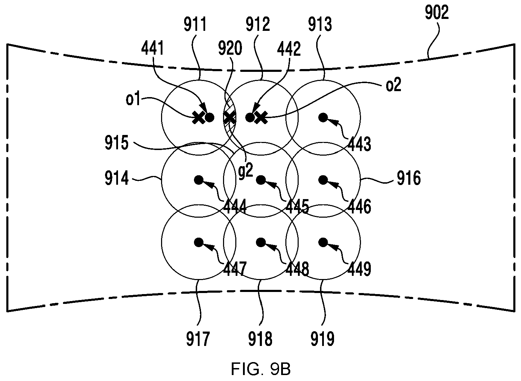

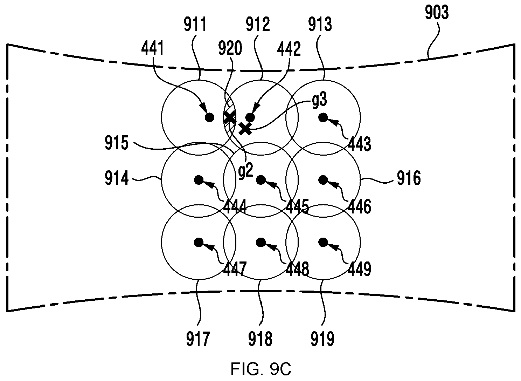

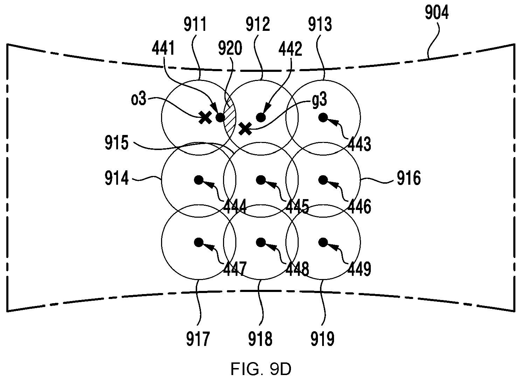

FIGS. 9A, 9B, 9C, and 9D illustrate an operation of a wearable device detecting a gaze position within an overlapping area 920 of detection areas 911, 912, 913, 914, 915, 916, 917, 918, and 919. The wearable device 101 of FIG. 1 and/or FIG. 2 and/or the processor 210 of FIG. 2 may perform the operation of the wearable device described with reference to FIGS. 9A to 9D. The operation of the wearable device described with reference to FIGS. 9A to 9D may be associated with at least one of the operations of FIG. 3.

Referring to FIGS. 9A to 9D, exemplary states 901, 902, 903, and 904 of the wearable device displaying exemplary virtual objects 441, 442, 443, 444, 445, 446, 447, 448, and 449 are illustrated. The virtual objects 441, 442, 443, 444, 445, 446, 447, 448, and 449 may be virtual objects arranged to receive a pattern in a lock screen. The wearable device may detect or identify a gaze position in the lock screen by using a camera (e.g., the camera 130 of FIG. 2).

Referring to FIG. 9A, the detection areas 911, 912, 913, 914, 915, 916, 917, 918, and 919 aligned with center points of the virtual objects 441, 442, 443, 444, 445, 446, 447, 448, and 449 are illustrated. The detection areas 911, 912, 913, 914, 915, 916, 917, 918, and 919 are illustrated for convenience of description, and may not be visible by a user wearing the wearable device. Since each of the detection areas 911, 912, 913, 914, 915, 916, 917, 918, and 919 is set to distinguish an intention of the user gazing at a corresponding virtual object, a size of each of the detection areas 911, 912, 913, 914, 915, 916, 917, 918, and 919 may be increased according to an error of the gaze position. Referring to FIG. 9A, the detection areas 911, 912, 913, 914, 915, 916, 917, 918, and 919 may at least partially overlap.

According to an embodiment, when detecting a gaze position located in an overlapping area (e.g., the overlapping area 920) of the detection areas 911, 912, 913, 914, 915, 916, 917, 918, and 919, the wearable device may move all of a plurality of virtual objects associated with the overlapping area. The wearable device may trigger movement of a gaze position following any one of the plurality of virtual objects by moving the plurality of virtual objects in directions opposite to each other. The wearable device may determine or identify a virtual object gazed by the user among the plurality of virtual objects by comparing a direction in which the gaze position is moved and directions in which the plurality of virtual objects are respectively moved. When detecting a gaze position located only in any one detection area among the detection areas 911, 912, 913, 914, 915, 916, 917, 918, and 919, the wearable device may move only a virtual object corresponding to the detection area based on the operation described above with reference to FIGS. 5A to 5D.

Referring to FIG. 9B, the exemplary state 902 of the wearable device identifying a gaze position g2 located in the overlapping area 920 of the detection areas 911 and 912 corresponding to the virtual objects 441 and 442 is illustrated. The wearable device may move the virtual objects 441 and 442 respectively corresponding to the detection areas 911 and 912 including the gaze position g2. Referring to FIG. 9B, the wearable device may move the virtual objects 441 and 442 such that the virtual objects 441 and 442 approach toward the gaze position g2. For example, the virtual object 441 may move from a position o1 of FIG. 9A to a position adjacent to the gaze position g2, and the virtual object 442 may move from the position o1 of FIG. 9A to a position adjacent to the gaze position g2.

Referring to FIG. 9B, since the virtual object 441 located on a left side of the gaze position g2 is moved toward the gaze position g2, and the virtual object 442 located on a right side of the gaze position g2 is moved toward the gaze position g2, the virtual objects 441 and 442 may be moved in directions opposite to each other. When the user gazes at a specific virtual object among the virtual objects 441 and 442, since the wearable device moves the virtual objects 441 and 442 along the directions opposite to each other, a gaze position may be moved along a direction in which the specific virtual object focused by the user is moved. The wearable device may accurately detect a virtual object focused by the user among the virtual objects 441 and 442 by using a direction in which the gaze position is moved.

Referring to FIG. 9C, the state 903 after the state 902 of FIG. 9B is illustrated. In the state 903, the wearable device may detect a gaze position g3 different from the gaze position g2 detected in the state 902. In the state 903 in which the gaze position g3 located on a right side of the gaze position g2 is detected, the wearable device may detect a movement direction (e.g., a direction toward the right side) of the gaze position g3. As described above with reference to FIGS. 9A to 9B, since the virtual object 441 among the virtual objects 441 and 442 is moved in the direction toward the right side, the wearable device may determine that the virtual object 441 moved similarly to the movement direction of the gaze position g3 is focused by the user. After determining that the virtual object 441 is focused by the user, the wearable device may maintain moving the virtual object 441 according to the gaze position. After determining that the virtual object 441 is focused by the user, the wearable device may fix a position of another virtual object (e.g., the virtual object 442) different from the virtual object 441, or may move it to an initial position.

Referring to FIG. 9D, in the state 904 after the state 903 of FIG. 9C, the wearable device may move the virtual object 441 according to the gaze position g3. For example, the virtual object 441 may be further moved from a position o3 in the state 903. In the exemplary state 904 of FIG. 9D, the wearable device may move the another virtual object 442 different from the virtual object 441 focused by the user to an initial position (a position in the state 901 of FIG. 9A). For example, the virtual object 442 may be moved from the position g3 in the state 903 to the initial position. After the state 904 of FIG. 9D, the wearable device may move the virtual object 441 according to the gaze position based on the operation described with reference to FIGS. 5A to 5D and/or FIGS. 6A to 6B.

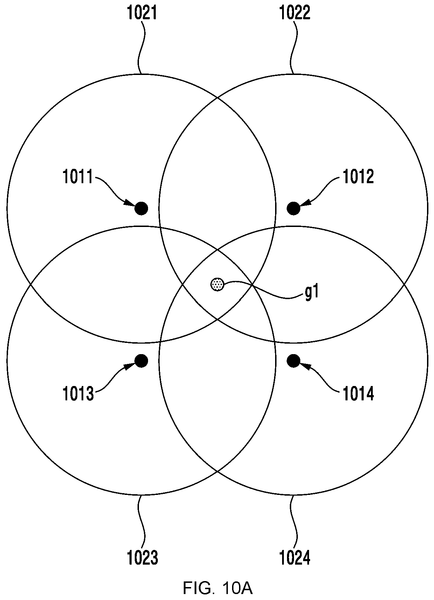

In an embodiment, directions for moving the virtual objects 441 and 442, which are moved based on the gaze position g2 included in the overlapping area 920, are not limited to an embodiment of FIGS. 9A to 9D. Hereinafter, with reference to FIGS. 10A to 10C, an exemplary operation of the wearable device detecting the gaze position g2 included in the overlapping area 920 will be described.

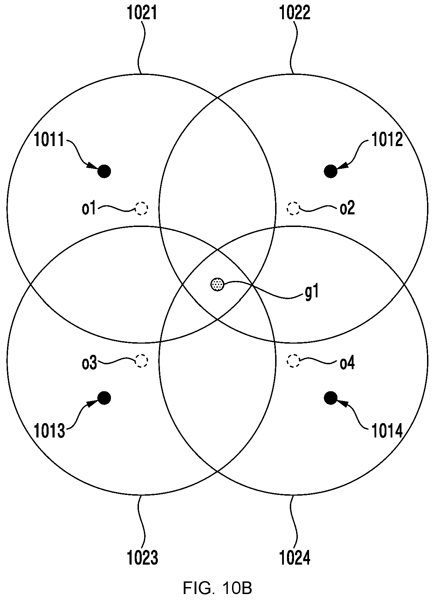

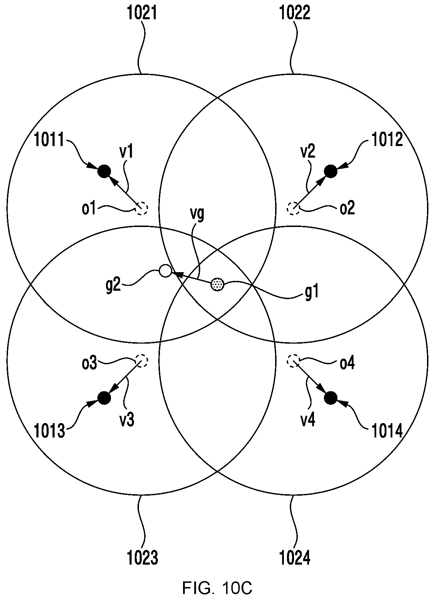

FIGS. 10A, 10B, and 10C illustrate an operation of a wearable device detecting a gaze position g1 within an overlapping area of detection areas 1021, 1022, 1023, and 1024. The wearable device 101 of FIG. 1 and/or FIG. 2 and/or the processor 210 of FIG. 2 may perform the operation of the wearable device described with reference to FIGS. 10A to 10C. The operation of the wearable device described with reference to FIGS. 10A to 10C may be associated with at least one of the operations of FIG. 3.

Referring to FIGS. 10A to 10C, exemplary states of the wearable device displaying exemplary virtual objects 1011, 1012, 1013, and 1014 are illustrated. A position, a shape, and/or a layout of the virtual objects 1011, 1012, 1013, and 1014 illustrated in FIGS. 10A to 10C are exemplary, and a position, a shape, and/or a layout of a virtual object displayed on a display (e.g., the display 110 of FIG. 2) are not limited. For example, the virtual objects 1011, 1012, 1013, and 1014 may be included in a lock screen. The wearable device may identify or detect an intention of a user gazing at a specific virtual object by using the detection areas 1021, 1022, 1023, and 1024 including the virtual objects 1011, 1012, 1013, and 1014.

Referring to FIG. 10A, the wearable device according to an embodiment may display the plurality of virtual objects 1011, 1012, 1013, and 1014 on the display. The wearable device may determine a gaze position g1 of the user wearing the wearable device by using an image of an eye obtained from a camera (e.g., the camera 130 of FIG. 2). Referring to FIG. 10A, an exemplary state in which the gaze position g1 is included in the overlapping area of the detection areas 1021, 1022, 1023, and 1024 is illustrated. The wearable device detecting the gaze position g1 within the overlapping area of the detection areas 1021, 1022, 1023, and 1024 of the virtual objects 1011, 1012, 1013, and 1014 may move the plurality of virtual objects 1011, 1012, 1013, and 1014 such that the plurality of virtual objects 1011, 1012, 1013, and 1014 move away from the gaze position g1. Referring to FIG. 10B, an exemplary state in which the wearable device detecting the gaze position g1 of FIG. 10A moves the plurality of virtual objects 1011, 1012, 1013, and 1014 is illustrated.

In the state of FIG. 10B, the wearable device may move the plurality of virtual objects 1011, 1012, 1013, and 1014 such that the plurality of virtual objects 1011, 1012, 1013, and 1014 move away from the gaze position g1. For example, the virtual object 1011 may move from an initial position o1 toward an upper left side. For example, the virtual object 1012 may move from an initial position o2 toward an upper right side. For example, the virtual object 1013 may move from an initial position o3 toward a lower left side. For example, the virtual object 1014 may move from an initial position o4 toward a lower right side. For example, the plurality of virtual objects 1011, 1012, 1013, and 1014 may be moved in different directions.

Referring to FIG. 10C, an exemplary state after the plurality of virtual objects 1011, 1012, 1013, and 1014 are moved is illustrated. The wearable device according to an embodiment may determine or detect a first virtual object focused by the user among the plurality of virtual objects 1011, 1012, 1013, and 1014 by using a displacement vg of a gaze position g2 detected after the plurality of virtual objects 1011, 1012, 1013, and 1014 are moved. Referring to FIG. 10C, in an exemplary state in which the gaze position g2 is detected, the wearable device may calculate or identify the displacement vg of the gaze position g1 before the state of FIG. 10C and the gaze position g2.

The wearable device according to an embodiment may compare directions v1, v2, v3, and v4 in which the plurality of virtual objects 1011, 1012, 1013, and 1014 are respectively moved and a direction of the displacement vg. For example, the wearable device may calculate angle differences between the direction of the displacement vg and each of the directions v1, v2, v3, and v4. A virtual object corresponding to any one direction having a minimum angle difference among the directions v1, v2, v3, and v4 may be determined as a virtual object focused by the user. In an exemplary case of FIG. 10C, since an angle difference between the direction v1 in which the virtual object 1011 is moved and the direction of the displacement vg is less than angle differences for the other directions v2, v3, and v4, the wearable device may determine the virtual object 1011 among the virtual objects 1011, 1012, 1013, and 1014 as the virtual object focused by the user.

In an embodiment, the wearable device may calculate similarity by using a size, a position, and/or a direction of the displacement vg. By using the similarity, the wearable device may determine whether a gaze follows a specific virtual object (or validity of data including the displacement vg). For example, data determined as invalid (e.g., a pair of a position of a virtual object and/or a result of the gaze position g1) may be removed. For example, when several virtual objects are controlled according to a gaze position, such as the plurality of virtual objects 1011, 1012, 1013, and 1014, and one or more valid data exist, the wearable device may cease or terminate control of a virtual object including invalid data. The virtual object of which control is ceased may be moved to an initial position. The wearable device may maintain control of a valid virtual object.

In an embodiment, when it is determined that the virtual object 1011 is focused by the user, the wearable device may store the displacement vg of the gaze position g2 as information to be used for calibration associated with the gaze position g2 adjacent to the virtual object 1011. When it is determined that the virtual object 1011 is focused by the user, the wearable device may move the virtual object 1011 by using the displacement vg of the gaze position g2. For example, a distance by which the virtual object 1011 is moved along the direction of the displacement vg may be lower than a size of the displacement vg. For example, the wearable device may move the virtual object 1011 by a size of the displacement vg to which a preset ratio is applied. For example, the wearable device may move the virtual objects 1012, 1013, and 1014 different from the virtual object 1011 to initial positions o2, o3, and o4, respectively.

In an embodiment, when it is determined that the virtual object 1011 is focused by the user, the wearable device may move the virtual object 1011 or cease to move the virtual object 1011 based on the operation described with reference to FIGS. 5A to 5D and/or FIGS. 6A to 6B. When ceasing to move the virtual object 1011, the wearable device may execute a function associated with the virtual object 1011.

As described above, according to an embodiment, when the detection areas 1021, 1022, 1023, and 1024 overlap each other, the wearable device may cause movement of a gaze position following any one of the virtual objects 1011, 1012, 1013, and 1014 by moving all of the virtual objects 1011, 1012, 1013, and 1014 respectively corresponding to the detection areas 1021, 1022, 1023, and 1024. By comparing the directions in which the virtual objects 1011, 1012, 1013, and 1014 are moved and the direction of the displacement vg of the gaze position g2, the wearable device may identify any one virtual object focused by the user.

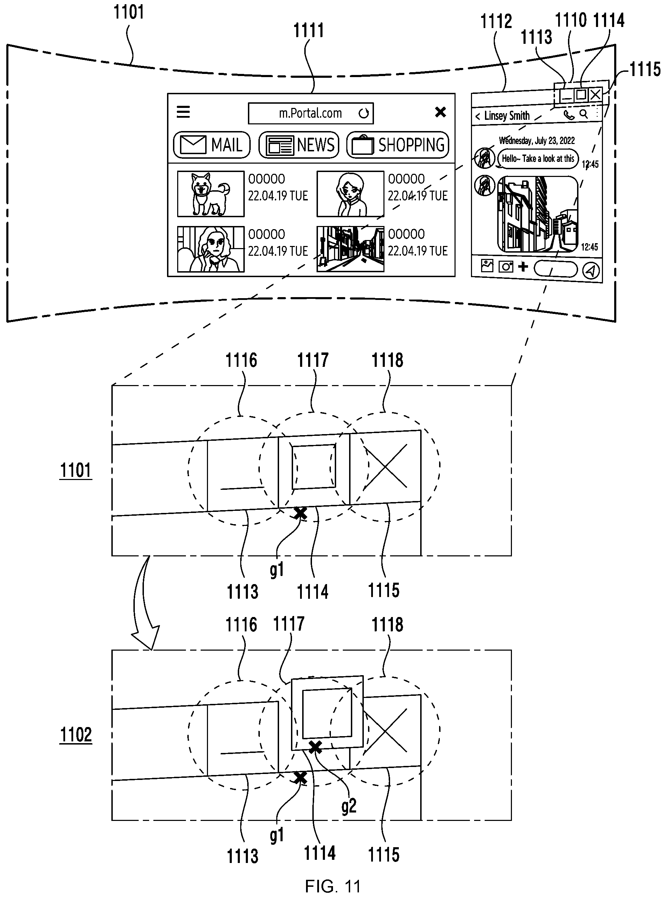

FIG. 11 illustrates an operation of a wearable device changing a position and/or a shape of a virtual object by using a gaze position g1. The wearable device 101 of FIG. 1 and/or FIG. 2 and/or the processor 210 of FIG. 2 may perform the operation of the wearable device described with reference to FIG. 11. The operation of the wearable device described with reference to FIG. 11 may be associated with at least one of the operations of FIG. 3.

Referring to FIG. 11, an exemplary state of the wearable device executing a plurality of software applications is illustrated. The wearable device may display, on a display (e.g., the display 110 of FIG. 2), panels 1111 and 1112 provided by the plurality of software applications. Although the panels 1111 and 1112 having a shape of a two-dimensional plane (e.g., a quadrangle or a quadrangle with a rounded corner) are exemplarily illustrated, an embodiment is not limited thereto. In an embodiment, the panels 1111 and 1112 may be referred to as a window and/or an Activity. Although an exemplary state of the wearable device displaying a screen 1101 including the panel 1111 based on execution of a web browser and the panel 1112 based on a messenger is illustrated, an embodiment is not limited thereto.

Referring to FIG. 11, the wearable device may display, on the panel 1112, visual objects 1113, 1114, and 1115 respectively corresponding to options associated with a size of the panel 1112. For example, the visual object 1113 may correspond to an option for minimizing the size of the panel 1112 or adding an icon for restoring the panel 1112 to a preset area (e.g., an area referred to as an app tray). The visual object 1113 may be referred to as a minimize button. For example, the visual object 1114 may correspond to an option for maximizing the size of the panel 1112 (e.g., a size covering the entire screen 1101). The visual object 1114 may be referred to as a maximize button. For example, the visual object 1115 may correspond to an option for ceasing display of the panel 1112 and terminating execution of a software application (e.g., a messenger application) corresponding to the panel 1112. The visual object 1115 may be referred to as an end button.

In an embodiment, by using the visual objects 1113, 1114, and 1115 located adjacent to each other, the wearable device may perform an operation for obtaining calibration information. Referring to FIG. 11, enlarged views 1101 and 1102 of a portion 1115 of the screen 1101 including the visual objects 1113, 1114, and 1115 are illustrated. Referring to the enlarged view 1101, detection areas 1116, 1117, and 1118 respectively corresponding to the visual objects 1113, 1114, and 1115 may be formed. Referring to the enlarged view 1101, the wearable device according to an embodiment may detect or identify a gaze position g1 included in the detection area 1117 corresponding to the visual object 1114.

In an embodiment, the wearable device detecting the gaze position g1 included in the detection area 1117 may change a position and/or a shape of the visual object 1114, as illustrated in the enlarged view 1102. For example, the wearable device detecting a gaze position g2 may change the position and/or the shape of the visual object 1114 by using a displacement of the gaze positions g1 and g2. For example, by changing a position and/or a shape of a figure (e.g., a quadrangular figure) included in the visual object 1114, the wearable device may cause an eye movement following the figure. The wearable device may store a gaze position moved by the eye movement as calibration information. While the gaze position g2 is maintained within the detection area 1117, the wearable device may complete or cease storing calibration information based on expiration of a preset period set to measure the calibration information. Based on expiration of the preset period, the wearable device may execute a function associated with the visual object 1114 (e.g., a function of maximizing the size of the panel 1112).

As described above, by using virtual objects different from virtual objects included in a lock screen, the wearable device may perform an operation for obtaining calibration information. The wearable device may obtain calibration information by using a virtual object mapped to a function different from a function for obtaining calibration information, without a virtual object designed to obtain calibration information or dedicated for obtaining calibration information. For example, the wearable device may obtain calibration information without a separate session for obtaining calibration information.

In an embodiment, the wearable device may move a virtual object not only in a horizontal direction and a vertical direction in a screen, but also in a depth direction (e.g., a direction moving away from a user or approaching toward the user). Hereinafter, an exemplary operation of the wearable device obtaining calibration information by using a virtual object moving along the depth direction will be described.

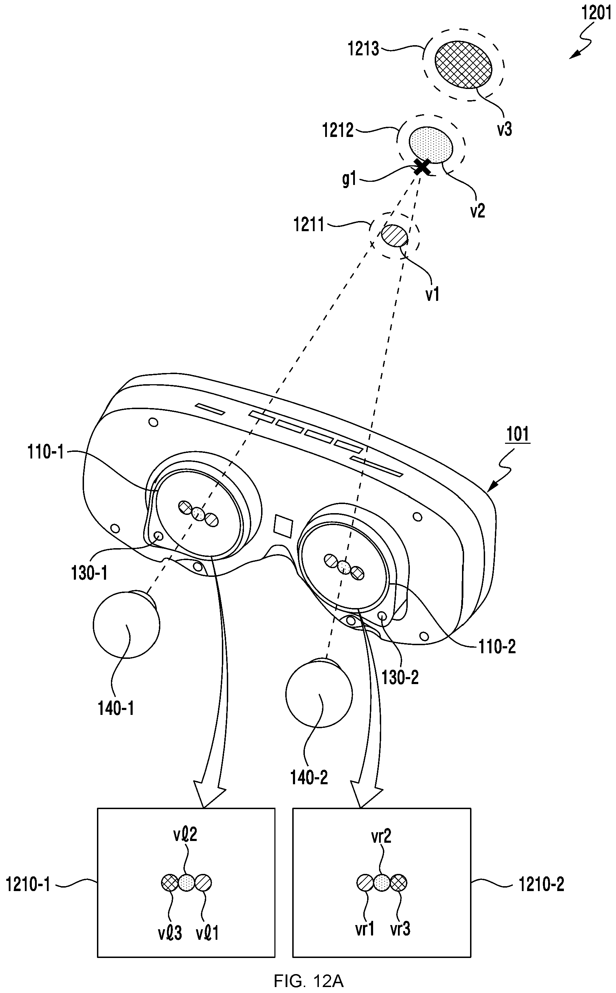

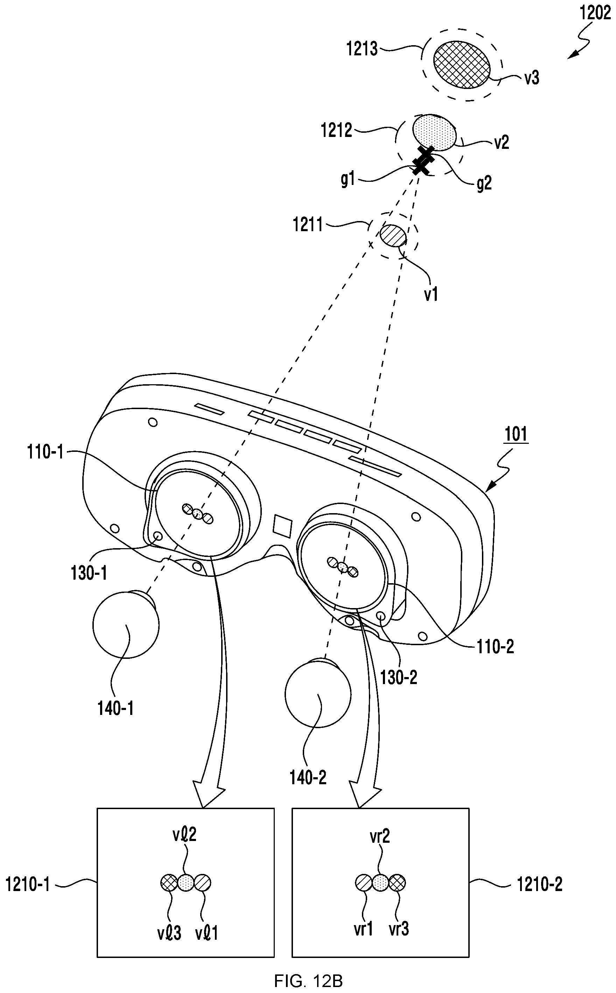

FIGS. 12A and 12B illustrate an operation of a wearable device 101 changing a depth of a virtual object (e.g., virtual objects v1, v2, and v3) by using a gaze position. The wearable device 101 of FIG. 1 and/or FIG. 2 and/or the processor 210 of FIG. 2 may perform the operation of the wearable device 101 described with reference to FIG. 12A and/or FIG. 12B. The operation of the wearable device 101 described with reference to FIG. 12A and/or FIG. 12B may be associated with at least one of the operations of FIG. 3.

Referring to FIG. 12A and/or FIG. 12B, exemplary states 1201 and 1202 of the wearable device 101 displaying the virtual objects v1, v2, and v3 are illustrated. Virtual objects vl1, vl2, and vl3 displayed on a first display 110-1 positioned toward a left eye of a user may respectively correspond to the virtual objects v1, v2, and v3. Virtual objects vr1, vr2, and vr3 displayed on a second display 110-2 positioned toward a right eye of the user may respectively correspond to the virtual objects v1, v2, and v3. For example, the user respectively viewing the virtual objects vl1 and vr1 with a left eye 140-1 and a right eye 140-2 may recognize the virtual object v1. For example, the user respectively viewing the virtual objects vl2 and vr2 with the left eye 140-1 and the right eye 140-2 may recognize the virtual object v2. For example, the user respectively viewing the virtual objects vl3 and vr3 with the left eye 140-1 and the right eye 140-2 may recognize the virtual object v3.

In an embodiment, by using a binocular parallax, the wearable device 101 may change distance senses of the virtual objects v1, v2, and v3. Respective positions of the virtual objects vl1, vl2, and vl3 in a first screen 1210-1 displayed on the first display 110-1 may be spaced apart from positions of the virtual objects vr1, vr2, and vr3 in a second screen 1210-2 displayed on the second display 110-2 by binocular parallaxes set for the virtual objects v1, v2, and v3, respectively. For example, a binocular parallax of the virtual object v1 may be greater than the other virtual objects v2 and v3. A binocular parallax of the virtual object v3 may be less than the other virtual objects v1 and v2. A binocular parallax of the virtual object v2 may be less than the binocular parallax of the virtual object v1, and may be greater than the binocular parallax of the virtual object v3. The user viewing the virtual objects v1, v2, and v3 may recognize that the virtual object v1 is located closer than the other virtual objects v2 and v3, and may recognize that the virtual object v3 is located farther than the other virtual objects v1 and v2.

In the state 1201 of FIG. 12A, the wearable device 101 may cause the virtual objects v1, v2, and v3 to be viewed as having the same size by adjusting sizes of the virtual objects v1, v2, and v3. Referring to the first screen 1210-1, the virtual objects vl1, vl2, and vl3 in the first screen 1210-1 may have the same size. Referring to the second screen 1210-2, the virtual objects vr1, vr2, and vr3 in the second screen 1210-2 may have the same size.

According to an embodiment, the wearable device 101 may calculate or determine a gaze position g1 by using images of two eyes (e.g., the left eye 140-1 and the right eye 140-2) obtained from a camera (e.g., the camera 130 of FIG. 2). For example, the wearable device 101 may calculate or determine three-dimensional coordinates indicating the gaze position g1. By comparing detection areas 1211, 1212, and 1213 respectively corresponding to the virtual objects v1, v2, and v3 with the gaze position g1, the wearable device 101 may determine whether to move each of the virtual objects v1, v2, and v3.

In the exemplary state 1201 of FIG. 12A, the wearable device 101 may detect the gaze position g1 included in the detection area 1212 corresponding to the virtual object v2. The wearable device 101 detecting the gaze position g1 within the detection area 1212 may move the virtual object v2 corresponding to the detection area 1212. For example, the wearable device 101 may change a position of the virtual object v2 by using a positional relationship between the gaze position g1 and the virtual object v2.

Referring to FIG. 12B, after the state 1201 of FIG. 12A, the exemplary state 1202 in which the position of the virtual object v2 is changed is illustrated. In the state 1202, the wearable device 101 may increase a depth value of the virtual object v2 or reduce the binocular parallax of the virtual object v2. Due to the increased depth value and/or the reduced binocular parallax, the virtual object v2 may be recognized as being farther away from the user. According to an embodiment, by changing a size of the virtual object v2, the wearable device 101 may cause the virtual object v2 in the state 1202 to match a size of the virtual object v2 recognized by the user in the state 1201 before the state 1202. For example, a size of the virtual object vl2 in the screen 1210-1 of the state 1202 and a size of the virtual object vl2 in the screen 1210-1 of the state 1201 may be equal to each other. For example, in the state 1202 in which the virtual object v2 is moved according to the gaze position g1, the wearable device 101 may change the size of the virtual object v2.

Referring to FIG. 12B, the wearable device 101 may detect a gaze position g2. In the state 1202 in which the gaze position g2 is detected, the wearable device 101 may move the virtual object v2 by using a displacement of the gaze positions g1 and g2. Moving the virtual object v2 by using the gaze position may be ceased based on at least one of a period set to move the virtual object v2, whether the gaze position is maintained within the detection area 1212, or whether the position of the virtual object v2 converges. Until moving the virtual object v2 is ceased, the wearable device 101 may store information associated with the gaze position as calibration information.

As described above, according to an embodiment, in order to obtain calibration information, the wearable device 101 may utilize a virtual object different from a virtual object dedicated for obtaining calibration information, such as a virtual object in a lock screen. For example, the wearable device 101 may move a virtual object according to a displacement of a gaze position. Since the wearable device 101 moves the virtual object by less than a size of the displacement, a position of the virtual object may be converged. Until the position of the virtual object is converged, the wearable device 101 may store information associated with the gaze position (e.g., a result of calculating the gaze position, and an image and/or a video of two eyes of the user) as calibration information.

Hereinafter, with reference to FIG. 13A, FIG. 13B, FIG. 14A, and/or FIG. 14B, an exemplary exterior of the wearable device 101 described with reference to FIGS. 1 to 11, FIG. 12A, and/or FIG. 12B will be illustrated. A wearable device 1300 of FIG. 13A and/or FIG. 13B and/or a wearable device 1400 of FIG. 14A and/or FIG. 14B may be an example of the wearable device 101 of FIG. 1.

FIG. 13A illustrates an example of a perspective view of a wearable device according to one embodiment. According to an embodiment, a wearable device 1300 may have a form of glasses that is wearable on a body part (e.g., head) of a user. The wearable device 1300 may include a head-mounted display (HMD). For example, a housing of the wearable device 1300 may include a flexible material such as rubber and/or silicone having a form closely attached to a portion of the user's head (for example, a portion of a face surrounding two eyes). For example, the housing of the wearable device 1300 may include one or more straps able to be twined around the user's head, and/or one or more temples attachable to ears of the head.

Referring to FIG. 13A, according to an embodiment, the wearable device 1300 may include at least one display 1350 and a frame supporting the at least one display 1350.

According to an embodiment, the wearable device 1300 may be wearable on a portion of the user's body. The wearable device 1300 may provide augmented reality (AR), virtual reality (VR), or mixed reality (MR) combining the augmented reality and the virtual reality to a user wearing the wearable device 1300. For example, the wearable device 1300 may display a virtual reality image provided from at least one optical device 1382 and 1384 of FIG. 13B on at least one display 1350, in response to a user's preset gesture obtained through a motion recognition camera 1360-2 and 1360-3 of FIG. 13B.

According to an embodiment, the at least one display 1350 may provide visual information to a user. For example, the at least one display 1350 may include a transparent or translucent lens. The at least one display 1350 may include a first display 1350-1 and/or a second display 1350-2 spaced apart from the first display 1350-1. For example, the first display 1350-1 and the second display 1350-2 may be disposed at positions corresponding to the user's left and right eyes, respectively.

Referring to FIG. 13B, the at least one display 1350 may provide visual information transmitted through a lens included in the at least one display 1350 from ambient light to a user and other visual information distinguished from the visual information13. The lens may be formed based on at least one of a fresnel lens, a pancake lens, or a multi-channel lens. For example, the at least one display 1350 may include a first surface 1331 and a second surface 1332 opposite to the first surface 1331. A display area may be formed on the second surface 1332 of at least one display 1350. When the user wears the wearable device 1300, ambient light may be transmitted to the user by being incident on the first surface 1331 and being penetrated through the second surface 1332. For another example, the at least one display 1350 may display an augmented reality image in which a virtual reality image provided by the at least one optical device 1382 and 1384 is combined with a reality screen transmitted through ambient light, on a display area formed on the second surface 1332.

According to an embodiment, the at least one display 1350 may include at least one waveguide 1333 and 1334 that transmits light transmitted from the at least one optical device 1382 and 1384 by diffracting to the user. The at least one waveguide 1333 and 1334 may be formed based on at least one of glass, plastic, or polymer. A nano pattern may be formed on at least a portion of the outside or inside of the at least one waveguide 1333 and 1334. The nano pattern may be formed based on a grating structure having a polygonal or curved shape. Light incident to an end of the at least one waveguide 1333 and 1334 may be propagated to another end of the at least one waveguide 1333 and 1334 by the nano pattern. The at least one waveguide 1333 and 1334 may include at least one of at least one diffraction element (e.g., a diffractive optical element (DOE), a holographic optical element (HOE)), and a reflection element (e.g., a reflection mirror). For example, the at least one waveguide 1333 and 1334 may be disposed in the wearable device 1300 to guide a screen displayed by the at least one display 1350 to the user's eyes. For example, the screen may be transmitted to the user's eyes based on total internal reflection (TIR) generated in the at least one waveguide 1333 and 1334.

The wearable device 1300 may analyze an object included in a real image collected through a photographing camera 1360-4, combine with a virtual object corresponding to an object that becomes a subject of augmented reality provision among the analyzed object, and display on the at least one display 1350. The virtual object may include at least one of text and images for various information associated with the object included in the real image. The wearable device 1300 may analyze the object based on a multi-camera such as a stereo camera. For the object analysis, the wearable device 1300 may execute space recognition (e.g., simultaneous localization and mapping (SLAM)) using the multi-camera and/or time-of-flight (ToF). The user wearing the wearable device 1300 may watch an image displayed on the at least one display 1350.

According to an embodiment, a frame may be configured with a physical structure in which the wearable device 1300 may be worn on the user's body. According to an embodiment, the frame may be configured so that when the user wears the wearable device 1300, the first display 1350-1 and the second display 1350-2 may be positioned corresponding to the user's left and right eyes. The frame may support the at least one display 1350. For example, the frame may support the first display 1350-1 and the second display 1350-2 to be positioned at positions corresponding to the user's left and right eyes.

Referring to FIG. 13A, according to an embodiment, the frame may include an area 1320 at least partially in contact with the portion of the user's body in case that the user wears the wearable device 1300. For example, the area 1320 of the frame in contact with the portion of the user's body may include an area in contact with a portion of the user's nose, a portion of the user's ear, and a portion of the side of the user's face that the wearable device 1300 contacts. According to an embodiment, the frame may include a nose pad 1310 that is contacted on the portion of the user's body. When the wearable device 1300 is worn by the user, the nose pad 1310 may be contacted on the portion of the user's nose. The frame may include a first temple 1304 and a second temple 1305, which are contacted on another portion of the user's body that is distinct from the portion of the user's body.

For example, the frame may include a first rim 1301 surrounding at least a portion of the first display 1350-1, a second rim 1302 surrounding at least a portion of the second display 1350-2, a bridge 1303 disposed between the first rim 1301 and the second rim 1302, a first pad 1311 disposed along a portion of the edge of the first rim 1301 from one end of the bridge 1303, a second pad 1312 disposed along a portion of the edge of the second rim 1302 from the other end of the bridge 1303, the first temple 1304 extending from the first rim 1301 and fixed to a portion of the wearer's ear, and the second temple 1305 extending from the second rim 1302 and fixed to a portion of the ear opposite to the ear. The first pad 1311 and the second pad 1312 may be in contact with the portion of the user's nose, and the first temple 1304 and the second temple 1305 may be in contact with a portion of the user's face and the portion of the user's ear. The temples 1304 and 1305 may be rotatably connected to the rim through hinge units 1306 and 1307 of FIG. 13B. The first temple 1304 may be rotatably connected with respect to the first rim 1301 through the first hinge unit 1306 disposed between the first rim 1301 and the first temple 1304. The second temple 1305 may be rotatably connected with respect to the second rim 1302 through the second hinge unit 1307 disposed between the second rim 1302 and the second temple 1305. According to an embodiment, the wearable device 1300 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 1300 may include hardware (e.g., hardware described above based on the block diagram of FIG. 2) that performs various functions. For example, the hardware may include a battery module 1370, an antenna module 1375, the at least one optical device 1382 and 1384, speakers (e.g., speakers 1355-1 and 1355-2), a microphone (e.g., microphones 1365-1, 1365-2, and 1365-3), a light emitting module, and/or a printed circuit board (PCB) 1390 (e.g., printed circuit board). Various hardware components may be disposed in the frame.

According to an embodiment, the microphone (e.g., the microphones 1365-1, 1365-2, and 1365-3) of the wearable device 1300 may obtain a sound signal, by being disposed on at least a portion of the frame. The first microphone 1365-1 disposed on the bridge 1303, the second microphone 1365-2 disposed on the second rim 1302, and the third microphone 1365-3 disposed on the first rim 1301 are illustrated in FIG. 13B, but the number and disposition of the microphone 1365 are not limited to an embodiment of FIG. 13B. In case that the number of the microphone 1365 included in the wearable device 1300 is two or more, the wearable device 1300 may identify a direction of the sound signal by using a plurality of microphones disposed on different portions of the frame.

According to an embodiment, the at least one optical device 1382 and 1384 may project a virtual object on the at least one display 1350 in order to provide various image information to the user. For example, the at least one optical device 1382 and 1384 may be a projector. The at least one optical device 1382 and 1384 may be disposed adjacent to the at least one display 1350 or may be included in the at least one display 1350 as a portion of the at least one display 1350. According to an embodiment, the wearable device 1300 may include a first optical device 1382 corresponding to the first display 1350-1, and a second optical device 1384 corresponding to the second display 1350-2. For example, the at least one optical device 1382 and 1384 may include the first optical device 1382 disposed at a periphery of the first display 1350-1 and the second optical device 1384 disposed at a periphery of the second display 1350-2. The first optical device 1382 may transmit light to the first waveguide 1333 disposed on the first display 1350-1, and the second optical device 1384 may transmit light to the second waveguide 1334 disposed on the second display 1350-2.

In an embodiment, a camera 1360 may include the photographing camera 1360-4, an eye tracking camera (ET CAM) 1360-1, and/or the motion recognition camera 1360-2 and 1360-3. The photographing camera 1360-4, the eye tracking camera 1360-1, and the motion recognition camera 1360-2 and 1360-3 may be disposed at different positions on the frame and may perform different functions. The eye tracking camera 1360-1 may output data indicating a position of eye or a gaze of the user wearing the wearable device 1300. For example, the wearable device 1300 may detect the gaze from an image including the user's pupil obtained through the eye tracking camera 1360-1.

The wearable device 1300 may identify an object (e.g., a real object, and/or a virtual object) focused by the user, by using the user's gaze obtained through the eye tracking camera 1360-1. The wearable device 1300 identifying the focused object may execute a function (e.g., gaze interaction) for interaction between the user and the focused object. The wearable device 1300 may represent a portion corresponding to eye of an avatar indicating the user in the virtual space, by using the user's gaze obtained through the eye tracking camera 1360-1. The wearable device 1300 may render an image (or a screen) displayed on the at least one display 1350, based on the position of the user's eye.

For example, visual quality (e.g., resolution, brightness, saturation, grayscale, and pixels per inch (PPI)) of a first area related to the gaze within the image and visual quality of a second area distinguished from the first area may be different. The wearable device 1300 may obtain an image having the visual quality of the first area matching the user's gaze and the visual quality of the second area by using foveated rendering. For example, when the wearable device 1300 supports an iris recognition function, user authentication may be performed based on iris information obtained using the eye tracking camera 1360-1. An example in which the eye tracking camera 1360-1 is disposed toward the user's right eye is illustrated in FIG. 13B, but the embodiment is not limited thereto, and the eye tracking camera 1360-1 may be disposed alone toward the user's left eye or may be disposed toward two eyes.

In an embodiment, the photographing camera 1360-4 may photograph a real image or background to be matched with a virtual image in order to implement the augmented reality or mixed reality content. The photographing camera 1360-4 may be used to obtain an image having a high resolution based on a high resolution (HR) or a photo video (PV). The photographing camera 1360-4 may photograph an image of a specific object existing at a position viewed by the user and may provide the image to the at least one display 1350. The at least one display 1350 may display one image in which a virtual image provided through the at least one optical device 1382 and 1384 is overlapped with information on the real image or background including an image of the specific object obtained by using the photographing camera 1360-4. The wearable device 1300 may compensate for depth information (e.g., a distance between the wearable device 1300 and an external object obtained through a depth sensor), by using an image obtained through the photographing camera 1360-4. The wearable device 1300 may perform object recognition through an image obtained using the photographing camera 1360-4. The wearable device 1300 may perform a function (e.g., auto focus (AF)) of focusing an object (or subject) within an image and/or an optical image stabilization (OIS) function (e.g., an anti-shaking function) by using the photographing camera 1360-4. While displaying a screen representing a virtual space on the at least one display 1350, the wearable device 1300 may perform a pass through function for displaying an image obtained through the photographing camera 1360-4 overlapping at least a portion of the screen. In an embodiment, the photographing camera 1360-4 may be disposed on the bridge 1303 disposed between the first rim 1301 and the second rim 1302.

The eye tracking camera 1360-1 may implement a more realistic augmented reality by matching the user's gaze with the visual information provided on the at least one display 1350, by tracking the gaze of the user wearing the wearable device 1300. For example, when the user looks at the front, the wearable device 1300 may naturally display environment information associated with the user's front on the at least one display 1350 at a position where the user is positioned. The eye tracking camera 1360-1 may be configured to capture an image of the user's pupil in order to determine the user's gaze. For example, the eye tracking camera 1360-1 may receive gaze detection light reflected from the user's pupil and may track the user's gaze based on the position and movement of the received gaze detection light. In an embodiment, the eye tracking camera 1360-1 may be disposed at a position corresponding to the user's left and right eyes. For example, the eye tracking camera 1360-1 may be disposed in the first rim 1301 and/or the second rim 1302 to face the direction in which the user wearing the wearable device 1300 is positioned.

The motion recognition camera 1360-2 and 1360-3 may provide a specific event to the screen provided on the at least one display 1350 by recognizing the movement of the whole or portion of the user's body, such as the user's torso, hand, or face. The motion recognition camera 1360-2 and 1360-3 may obtain a signal corresponding to motion by recognizing the user's motion (e.g., gesture recognition), and may provide a display corresponding to the signal to the at least one display 1350. The processor may identify a signal corresponding to the operation and may perform a preset function based on the identification. The motion recognition camera 1360-2 and 1360-3 may be used to perform SLAM for 6 degrees of freedom pose (6 dof pose) and/or a space recognition function using a depth map. The processor may perform a gesture recognition function and/or an object tracking function, by using the motion recognition camera 1360-2 and 1360-3. In an embodiment, the motion recognition camera 1360-2 and camera 1360-3 may be disposed on the first rim 1301 and/or the second rim 1302.

The camera 1360 included in the wearable device 1300 are not limited to the above-described eye tracking camera 1360-1 and the motion recognition camera 1360-2 and 1360-3. For example, the wearable device 1300 may identify an external object included in a field of view (FoV) by using a camera disposed toward the user's FoV. The wearable device 1300 identifying the external object may be performed based on a sensor for identifying a distance between the wearable device 1300 and the external object, such as a depth sensor and/or a time of flight (ToF) sensor. The camera 1360 disposed toward the FoV may support an autofocus (AF) function and/or an optical image stabilization (OIS) function. For example, in order to obtain an image including a face of the user wearing the wearable device 1300, the wearable device 1300 may include the camera 1360 (e.g., a face tracking (FT) camera) disposed toward the face.

Although not illustrated, the wearable device 1300 according to an embodiment may further include a light source (e.g., LED) that emits light toward a subject (e.g., user's eyes, face, and/or an external object in the FoV) photographed by using the camera 1360. The light source may include an LED having an infrared wavelength. The light source may be disposed on at least one of the frame, and the hinge units 1306 and 1307.

According to an embodiment, the battery module 1370 may supply power to electronic components of the wearable device 1300. In an embodiment, the battery module 1370 may be disposed in the first temple 1304 and/or the second temple 1305. For example, the battery module 1370 may be a plurality of battery modules 1370. The plurality of battery modules 1370, respectively, may be disposed on each of the first temple 1304 and the second temple 1305. In an embodiment, the battery module 1370 may be disposed at an end of the first temple 1304 and/or the second temple 1305.

The antenna module 1375 may transmit the signal or power to the outside of the wearable device 1300 or may receive the signal or power from the outside. In an embodiment, the antenna module 1375 may be disposed in the first temple 1304 and/or the second temple 1305. For example, the antenna module 1375 may be disposed close to one surface of the first temple 1304 and/or the second temple 1305.

The speaker 1355 may output a sound signal to the outside of the wearable device 1300. A sound output module may be referred to as a speaker. In an embodiment, the speaker 1355 may be disposed in the first temple 1304 and/or the second temple 1305 in order to be disposed adjacent to the ear of the user wearing the wearable device 1300. For example, the speaker 1355 may include a second speaker 1355-2 disposed adjacent to the user's left ear by being disposed in the first temple 1304, and a first speaker 1355-1 disposed adjacent to the user's right ear by being disposed in the second temple 1305.

The light emitting module (not illustrated) may include at least one light emitting element. The light emitting module may emit light of a color corresponding to a specific state or may emit light through an operation corresponding to the specific state in order to visually provide information on a specific state of the wearable device 1300 to the user. For example, when the wearable device 1300 requires charging, it may emit red light at a constant cycle. In an embodiment, the light emitting module may be disposed on the first rim 1301 and/or the second rim 1302.

Referring to FIG. 13B, according to an embodiment, the wearable device 1300 may include the printed circuit board (PCB) 1390. The PCB 1390 may be included in at least one of the first temple 1304 or the second temple 1305. The PCB 1390 may include an interposer disposed between at least two sub PCBs. On the PCB 1390, one or more hardware (e.g., hardware illustrated by different blocks of FIG. 2) included in the wearable device 1300 may be disposed. The wearable device 1300 may include a flexible PCB (FPCB) for interconnecting the hardware.

According to an embodiment, the wearable device 1300 may include at least one of a gyro sensor, a gravity sensor, and/or an acceleration sensor for detecting the posture of the wearable device 1300 and/or the posture of a body part (e.g., a head) of the user wearing the wearable device 1300. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 1300 may identify the user's motion and/or gesture performed to execute or stop a specific function of the wearable device 1300 based on the IMU.

FIGS. 14A to 14B illustrate an example of an exterior of a wearable device according to an embodiment. A wearable device 1400 of FIGS. 14A to 14B may include at least a portion of hardware of the wearable device 1300 described with reference to FIGS. 13A and/or 13B. According to an embodiment, an example of an exterior of a first surface 1410 of a housing of the wearable device 1400 may be illustrated in FIG. 14A, and an example of an exterior of a second surface 1420 opposite to the first surface 1410 may be illustrated in FIG. 14B.

Referring to FIG. 14A, according to an embodiment, the first surface 1410 of the wearable device 1400 may have an attachable shape on the user's body part (e.g., the user's face). Although not illustrated, the wearable device 1400 may further include a strap for being fixed on the user's body part, and/or one or more temples (e.g., the first temple 1304 and/or the second temple 1305 of FIGS. 13A to 13B). A first display 1350-1 for outputting an image to the left eye among the user's two eyes and a second display 1350-2 for outputting an image to the right eye among the user's two eyes may be disposed on the first surface 1410. The wearable device 1400 may further include rubber or silicon packing, which are formed on the first surface 1410, for preventing interference by light (e.g., ambient light) different from the light emitted from the first display 1350-1 and the second display 1350-2.

According to an embodiment, the wearable device 1400 may include a camera 1360-1 for photographing and/or tracking two eyes of the user adjacent to each of the first display 1350-1 and the second display 1350-2. The camera 1360-1 may be referred to as the gaze tracking camera 1360-1 of FIG. 13B. According to an embodiment, the wearable device 1400 may include cameras 1360-5 and 1360-6 for photographing and/or recognizing the user's face. The cameras 1360-5 and 1360-6 may be referred to as a FT camera. The wearable device 1400 may control an avatar representing a user in a virtual space, based on a motion of the user's face identified using the cameras 1360-5 and 1360-6. For example, the wearable device 1400 may change a texture and/or a shape of a portion (e.g., a portion of an avatar representing a human face) of the avatar, by using information obtained by the cameras 1360-5 and 1360-6 (e.g., the FT camera) and representing the facial expression of the user wearing the wearable device 1400.

Referring to FIG. 14B, a camera (e.g., cameras 1360-7, 1360-8, 1360-9, 1360-10, 1360-11, and 1360-12), and/or a sensor (e.g., the depth sensor 1430) for obtaining information associated with the external environment of the wearable device 1400 may be disposed on the second surface 1420 opposite to the first surface 1410 of FIG. 14A. For example, the cameras 1360-7, 1360-8, 1360-9, and 1360-10 may be disposed on the second surface 1420 in order to recognize an external object. The cameras 1360-7, 1360-8, 1360-9, and 1360-10 of FIG. 14B may correspond as the motion recognition cameras 1360-2 and 1360-3 of FIG. 13B.

For example, by using cameras 1360-11 and 1360-12, the wearable device 1400 may obtain an image and/or video to be transmitted to each of the user's two eyes. The camera 1360-11 may be disposed on the second surface 1420 of the wearable device 1400 to obtain an image to be displayed through the second display 1350-2 corresponding to the right eye among the two eyes. The camera 1360-12 may be disposed on the second surface 1420 of the wearable device 1400 to obtain an image to be displayed through the first display 1350-1 corresponding to the left eye among the two eyes. The cameras 1360-11 and 1360-12 may correspond to as the photographing camera 1360-4 of FIG. 13B.

According to an embodiment, the wearable device 1400 may include the depth sensor 1430 disposed on the second surface 1420 in order to identify a distance between the wearable device 1400 and the external object. By using the depth sensor 1430, the wearable device 1400 may obtain spatial information (e.g., a depth map) about at least a portion of the FoV of the user wearing the wearable device 1400. Although not illustrated, a microphone for obtaining sound outputted from the external object may be disposed on the second surface 1420 of the wearable device 1400. The number of microphones may be one or more according to embodiments.

In an embodiment, a method for obtaining calibration information associated with a gaze position without a virtual object dedicated for calibration may be required. In an embodiment, a method for obtaining calibration information associated with a gaze position by using a virtual object for unlocking may be required. As described above, according to an embodiment, a wearable device (e.g., the wearable device 101 of FIG. 1, the wearable device 1300 of FIGS. 13A to 13B, and/or the wearable device 1400 of FIGS. 14A to 14B) may comprise at least one display (e.g., the display 110 of FIG. 2), at least one camera (e.g., the camera 130 of FIG. 2) configured to be positioned toward an eye of a user wearing the wearable device, at least one processor (e.g., the processor 210 of FIG. 2) comprising processing circuitry, and memory (e.g., the memory 215 of FIG. 2), comprising one or more storage mediums, storing instructions. The at least one processor may be configured individually or collectively to display, on the at least one display, a virtual object (e.g., the virtual object o of FIG. 1). The at least one processor may be configured individually or collectively to determine a gaze position (e.g., the gaze position g1 of FIG. 1) of the user by using an image of the eye obtained from the at least one camera. The at least one processor may be configured individually or collectively to, while detecting the gaze position within a detection area (e.g., the detection area 451 of FIG. 4, the detection area 520 of FIGS. 5A to 5D, the detection area 720 of FIG. 7, the detection areas 911, 912, 913, 914, 915, 916, 917, 918, and 919 of FIGS. 9A to 9D, the detection areas 1021, 1022, 1023, and 1024 of FIGS. 10A to 10C, the detection areas 1116, 1117, and 1118 of FIG. 11, and the detection areas 1211, 1212, and 1213 of FIGS. 12A to 12B) which includes the virtual object, determine information indicating a displacement of gaze positions respectively detected at two time points. The at least one processor may be configured individually or collectively to, based on the determined information, determine a distance for moving the virtual object within a range lower than a size of the displacement indicated by the information. The at least one processor may be configured individually or collectively to, based on determining the distance longer than a threshold distance, move the virtual object by the determined distance along a direction of the displacement indicated by the information. The at least one processor may be configured individually or collectively to, based on determining the distance shorter than the threshold distance, cease to move the virtual object. The at least one processor may be configured individually or collectively to, based on cessation of moving the virtual object, execute a function associated with the virtual object.

According to an embodiment, a wearable device (e.g., the wearable device 101 of FIG. 1, the wearable device 1300 of FIGS. 13A to 13B, and/or the wearable device 1400 of FIGS. 14A to 14B) may comprise at least one display (e.g., the display 110 of FIG. 2), at least one camera (e.g., the camera 130 of FIG. 2) configured to be positioned toward an eye of a user wearing the wearable device, at least one processor (e.g., the processor 210 of FIG. 2) comprising processing circuitry, and memory (e.g., the memory 215 of FIG. 2), comprising one or more storage mediums, storing instructions. The at least one processor may be configured individually or collectively to display, on the at least one display, a virtual object (e.g., the virtual object o of FIG. 1). The at least one processor may be configured individually or collectively to determine a gaze position (e.g., the gaze position g1 of FIG. 1) of the user by using an image of the eye obtained from the at least one camera. The at least one processor may be configured individually or collectively to, based on detecting the gaze position within a detection area (e.g., the detection area 451 of FIG. 4, the detection area 520 of FIGS. 5A to 5D, the detection area 720 of FIG. 7, the detection areas 911, 912, 913, 914, 915, 916, 917, 918, and 919 of FIGS. 9A to 9D, the detection areas 1021, 1022, 1023, and 1024 of FIGS. 10A to 10C, the detection areas 1116, 1117, and 1118 of FIG. 11, and the detection areas 1211, 1212, and 1213 of FIGS. 12A to 12B) which includes the virtual object, determine information indicating a displacement of the gaze position within the detection area. The at least one processor may be configured individually or collectively to move the virtual object along a direction of the displacement. A distance of the virtual object moved along the direction may be lower than a size of the displacement. The at least one processor may be configured individually or collectively to repeatedly move the virtual object along the direction while the distance exceeds a threshold distance. The at least one processor may be configured individually or collectively to, based on identifying that the distance is lower than the threshold distance, cease to move the virtual object by using the gaze position. The at least one processor may be configured individually or collectively to, based on cessation of moving the virtual object, execute a function associated with the virtual object. According to an embodiment, the wearable device may obtain calibration information associated with the gaze position without a virtual object dedicated for calibration. According to an embodiment, the wearable device may obtain calibration information associated with the gaze position by using a virtual object for unlocking.

For example, the at least one processor may be configured individually or collectively to move the virtual object by a size of the displacement to which a preset ratio is applied.

For example, the at least one processor may be configured individually or collectively to, based on cessation of moving the virtual object, store at least one of the gaze position or the displacement of the gaze position, which are obtained while the virtual object is moved.

For example, the at least one processor may be configured individually or collectively to, based on detecting the gaze position adjacent to a position where the virtual object is displayed after executing the function, perform calibration associated with the gaze position using at least one of the stored gaze position or the displacement.

For example, the at least one processor may be configured individually or collectively to, based on cessation of moving the virtual object, display the virtual object at a position displayed before detecting the gaze position within the detection area.

For example, the at least one processor may be configured individually or collectively to, by using information indicating an error of the gaze position at a position where the virtual object is displayed, determine a size of the detection area.

For example, the at least one processor may be configured individually or collectively to, during a time section that the gaze position is updated, move the virtual object such that the virtual object is moved by the distance shorter than the size of the displacement.

For example, the at least one processor may be configured individually or collectively to, in a locked state of the wearable device, display the virtual object and other virtual objects configured to receive a pattern for switching the locked state.

As described above, in an embodiment, a non-transitory computer readable storage medium storing instructions may be provided. The instructions may be executed by a wearable device. The wearable device may comprise at least one display and at least one camera configured to be positioned toward an eye of a user wearing the wearable device. The instructions, when executed by the wearable device, may cause the wearable device to display, on the at least one display, a virtual object. The instructions, when executed by the wearable device, may cause the wearable device to determine a gaze position of the user by using an image of the eye obtained from the at least one camera. The instructions, when executed by the wearable device, may cause the wearable device to, while detecting the gaze position within a detection area which includes the virtual object, determine information indicating a displacement of the gaze positions respectively detected at two time points. The instructions, when executed by the wearable device, may cause the wearable device to, based on the determined information, determine a distance for moving the virtual object within a range lower than a size of the displacement indicated by the information. The instructions, when executed by the wearable device, may cause the wearable device to, based on determining the distance longer than a threshold distance, move the virtual object by the determined distance along a direction of the displacement indicated by the information. The instructions, when executed by the wearable device, may cause the wearable device to, based on determining the distance shorter than the threshold distance, cease to move the virtual object. The instructions, when executed by the wearable device, may cause the wearable device to, based on cessation of moving the virtual object, execute a function associated with the virtual object.

As described above, in an embodiment, a non-transitory computer readable storage medium storing instructions may be provided. The instructions may be executed by a wearable device. The wearable device may comprise at least one display and at least one camera configured to be positioned toward an eye of a user wearing the wearable device. The instructions, when executed by the wearable device, may cause the wearable device to display, on the at least one display, a virtual object. The instructions, when executed by the wearable device, may cause the wearable device to determine a gaze position of the user by using an image of the eye obtained from the at least one camera. The instructions, when executed by the wearable device, may cause the wearable device to, based on detecting the gaze position within a detection area which includes the virtual object, determine information indicating a displacement of the gaze position within the detection area. The instructions, when executed by the wearable device, may cause the wearable device to move the virtual object along a direction of the displacement. A distance of the virtual object moved along the direction may be lower than a size of the displacement. The instructions, when executed by the wearable device, may cause the wearable device to repeatedly move the virtual object along the direction while the distance exceeds a threshold distance. The instructions, when executed by the wearable device, may cause the wearable device to, based on identifying that the distance is lower than the threshold distance, cease to move the virtual object by using the gaze position. The instructions, when executed by the wearable device, may cause the wearable device to, based on cessation of moving the virtual object, execute a function associated with the virtual object.

For example, the instructions, when executed by the wearable device, may cause the wearable device to move the virtual object by a size of the displacement to which a preset ratio is applied.

For example, the instructions, when executed by the wearable device, may cause the wearable device to, based on cessation of moving the virtual object, store at least one of the gaze position or the displacement of the gaze position, which are obtained while the virtual object is moved.

For example, the instructions, when executed by the wearable device, may cause the wearable device to, based on detecting the gaze position adjacent to a position where the virtual object is displayed after executing the function, perform calibration associated with the gaze position using at least one of the stored gaze position or the displacement.

For example, the instructions, when executed by the wearable device, may cause the wearable device to, based on cessation of moving the virtual object, display the virtual object at a position displayed before detecting the gaze position within the detection area.

For example, the instructions, when executed by the wearable device, may cause the wearable device to, by using information indicating an error of the gaze position at a position where the virtual object is displayed, determine a size of the detection area.

For example, the instructions, when executed by the wearable device, may cause the wearable device to, during a time section that the gaze position is updated, move the virtual object such that the virtual object is moved by the distance shorter than the size of the displacement.

For example, the instructions, when executed by the wearable device, may cause the wearable device to, in a locked state of the wearable device, display the virtual object and other virtual objects configured to receive a pattern for switching the locked state.

As described above, in an embodiment, a method of a wearable device may be provided. The wearable device may comprise at least one display and at least one camera configured to be positioned toward an eye of a user wearing the wearable device. The method may comprise displaying, on the at least one display, a plurality of virtual objects. The method may comprise determining a gaze position of the user by using an image of the eye obtained from the at least one camera. The method may comprise, based on detecting the gaze position within an overlapping area of detection areas of the plurality of virtual objects, moving the plurality of virtual objects such that the plurality of virtual objects are moved away from the gaze position. The method may comprise determining a first virtual object among the plurality of virtual objects which is focused by the user by using a displacement of the gaze position that is detected after the plurality of virtual objects are moved. The method may comprise, based on determining the first virtual object, storing the displacement of the gaze position as information to be used for calibration associated with the gaze position adjacent to the first virtual object.

For example, the storing may comprise, after determining the first virtual object, moving the first virtual object along a direction of the displacement of the gaze position. A distance by which the first virtual object is moved along the direction may be lower than a size of the displacement of the gaze position. The storing may comprise repeatedly moving the first virtual object along the direction while the distance by which the first virtual object is moved exceeds a threshold distance. The storing may comprise, based on identifying that the distance by which the first virtual object is moved is lower than the threshold distance, ceasing to move the first virtual object using the gaze position. The storing may comprise, based on cessation of moving the first virtual object, executing a function associated with the first virtual object.

For example, the moving the first virtual object after determining the first virtual object may comprise moving the first virtual object by a size of the displacement to which a preset ratio is applied.

For example, the determining the first virtual object may comprise comparing directions in which the plurality of virtual objects are respectively moved and a direction of the displacement.

As described above, according to an embodiment, a wearable device (e.g., the wearable device 101 of FIG. 1, the wearable device 1300 of FIGS. 13A to 13B, and/or the wearable device 1400 of FIGS. 14A to 14B) may comprise at least one display (e.g., the display 110 of FIG. 2), at least one camera (e.g., the camera 130 of FIG. 2) configured to be positioned toward an eye of a user wearing the wearable device, at least one processor (e.g., the processor 210 of FIG. 2) comprising processing circuitry, and memory (e.g., the memory 215 of FIG. 2), comprising one or more storage mediums, storing instructions. The at least one processor may be configured individually or collectively to display, on the at least one display, a plurality of virtual objects (e.g., the virtual objects 441, 442, 443, 444, 445, 446, 447, 448, and 449 of FIGS. 9A to 9D and/or the virtual objects 1011, 1012, 1013, and 1014 of FIGS. 10A to 10B). The at least one processor may be configured individually or collectively to determine a gaze position (e.g., the gaze position g2 of FIG. 9B and/or the gaze position g1 of FIG. 10A) of the user by using an image of the eye obtained from the at least one camera. The at least one processor may be configured individually or collectively to, based on detecting the gaze position within an overlapping area (e.g., the overlapping area 920 of FIG. 9A) of detection areas of the plurality of virtual objects, move the plurality of virtual objects such that the plurality of virtual objects are moved away from the gaze position. The at least one processor may be configured individually or collectively to determine a first virtual object among the plurality of virtual objects which is focused by the user by using a displacement (e.g., the displacement vg of FIG. 10C) of the gaze position that is detected after the plurality of virtual objects are moved. The at least one processor may be configured individually or collectively to, based on determining the first virtual object, store the displacement of the gaze position as information to be used for calibration associated with the gaze position adjacent to the first virtual object.

For example, the at least one processor may be configured individually or collectively to, after determining the first virtual object, move the first virtual object along a direction of the displacement of the gaze position. A distance by which the first virtual object is moved along the direction may be lower than a size of the displacement of the gaze position. The at least one processor may be configured individually or collectively to repeatedly move the first virtual object along the direction while the distance by which the first virtual object is moved exceeds a threshold distance. The at least one processor may be configured individually or collectively to, based on identifying that the distance by which the first virtual object is moved is lower than the threshold distance, cease to move the first virtual object by using the gaze position. The at least one processor may be configured individually or collectively to, based on cessation of moving the first virtual object, execute a function associated with the first virtual object.

For example, the at least one processor may be configured individually or collectively to move the first virtual object by a size of the displacement to which a preset ratio is applied.

For example, the at least one processor may be configured individually or collectively to compare directions in which the plurality of virtual objects are respectively moved and a direction of the displacement.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

Although the embodiments have been described above with reference to limited examples and drawings, various modifications and variations may be made from the above description by those skilled in the art. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device comprising:
at least one display;
at least one camera configured to be positioned toward an eye of a user wearing the wearable device;
at least one processor comprising processing circuitry;
memory, comprising one or more storage mediums, storing instructions,
wherein the instructions, when executed by the at least one processor individually or collectively, cause the wearable device to:
display, on the at least one display, a virtual object;
determine a gaze position of the user by using an image of the eye obtained from the at least one camera;
while detecting the gaze position within a detection area which includes the virtual object, determine information indicating a displacement of gaze positions respectively detected at two time points;
based on the determined information:
determine a distance for moving the virtual object within a range lower than a size of the displacement indicated by the information;
based on determining the distance longer than a threshold distance, move the virtual object by the determined distance along a direction of the displacement indicated by the information; and
based on determining the distance shorter than the threshold distance, cease to move the virtual object,
based on cessation of moving the virtual object, execute a function associated with the virtual object.

2. The electronic device of claim 1, wherein the instructions, when executed by the at least one processor individually or collectively, cause the wearable device to:
move the virtual object by a size of the displacement to which a preset ratio is applied.

3. The electronic device of claims 1 to 2, wherein the instructions, when executed by the at least one processor individually or collectively, cause the wearable device to:
based on cessation of moving the virtual object, store at least one of the gaze position or the displacement of the gaze position, which are obtained while the virtual object is moved.

4. The electronic device of claim 3, wherein the instructions, when executed by the at least one processor individually or collectively, cause the wearable device to:
based on detecting the gaze position adjacent to a position where the virtual object is displayed after executing the function, perform calibration associated with the gaze position using at least one of the stored gaze position or the displacement.

5. The electronic device of claims 1 to 4, wherein the instructions, when executed by the at least one processor individually or collectively, cause the wearable device to:
based on cessation of moving the virtual object, display the virtual object at a position displayed before detecting the gaze position within the detection area.

6. The electronic device of claims 1 to 5, wherein the instructions, when executed by the at least one processor individually or collectively, cause the wearable device to:
by using information indicating an error of the gaze position at a position where the virtual object is displayed, determine a size of the detection area.

7. The electronic device of claims 1 to 6, wherein the instructions, when executed by the at least one processor individually or collectively, cause the wearable device to:
during a time section that the gaze position is updated, move the virtual object such that the virtual object is moved by the distance shorter than the size of the displacement.

8. The electronic device of claims 1 to 7, wherein the instructions, when executed by the at least one processor individually or collectively, cause the wearable device to:
in a locked state of the wearable device, display the virtual object and other virtual objects configured to receive a pattern for switching the locked state.

9. A non-transitory computer readable storage medium storing instructions, wherein the instructions, when executed by a wearable device, wherein the wearable device comprises at least one display and at least one camera configured to be positioned toward an eye of a user wearing the wearable device, cause the wearable device to:
display, on the at least one display, a virtual object;
determine a gaze position of the user by using an image of the eye obtained from the at least one camera;
while detecting the gaze position within a detection area which includes the virtual object, determine information indicating a displacement of the gaze positions respectively detected at two time points;
based on the determined information:
determine a distance for moving the virtual object within a range lower than a size of the displacement indicated by the information;
based on determining the distance longer than a threshold distance, move the virtual object by the determined distance along a direction of the displacement indicated by the information; and
based on determining the distance shorter than the threshold distance, cease to move the virtual object,
based on cessation of moving the virtual object, execute a function associated with the virtual object.

10. The non-transitory computer readable storage medium of claim 9, wherein the instructions, when executed by the wearable device, cause the wearable device to:
move the virtual object by a size of the displacement to which a preset ratio is applied.

11. The non-transitory computer readable storage medium of claims 9 to 10, wherein the instructions, when executed by the wearable device, cause the wearable device to:
based on cessation of moving the virtual object, store at least one of the gaze position or the displacement of the gaze position, which are obtained while the virtual object is moved.

12. The non-transitory computer readable storage medium of claim 11, wherein the instructions, when executed by the wearable device, cause the wearable device to:
based on detecting the gaze position adjacent to a position where the virtual object is displayed after executing the function, perform calibration associated with the gaze position using at least one of the stored gaze position or the displacement.

13. The non-transitory computer readable storage medium of claims 9 to 12, wherein the instructions, when executed by the wearable device, cause the wearable device to:
based on cessation of moving the virtual object, display the virtual object at a position displayed before detecting the gaze position within the detection area.

14. The non-transitory computer readable storage medium of claims 9 to 13, wherein the instructions, when executed by the wearable device, cause the wearable device to:
by using information indicating an error of the gaze position at a position where the virtual object is displayed, determine a size of the detection area.

15. The non-transitory computer readable storage medium of claims 9 to 14, wherein the instructions, when executed by the wearable device, cause the wearable device to:
during a time section that the gaze position is updated, move the virtual object such that the virtual object is moved by the distance shorter than the size of the displacement.
